# EUROPEAN PATENT APPLICATION

(11) **EP 4 708 999 A1**
(43) Date of publication of application: **11.03.2026**
(21) Application number: 24806200.2
(22) Date of filing: 26.03.2024
(51) Int. Cl.: H04W 72/0446, H04J 3/16

(54) **BEARING METHOD, AND COMMUNICATION NODE AND STORAGE MEDIUM**

(30) Priority: 18.05.2023 CN 202310570037
(71) Applicant: ZTE Corporation, Shenzhen, Guangdong 518057 (CN)
(72) Inventor: LIU, Feng, Shenzhen, Guangdong 518057 (CN)
(74) Representative: Aipex B.V.
(86) International application number: PCT/CN2024/083893
(87) International publication number: WO 2024/234840

(57) **Abstract**

Disclosed are a bearing method, a communication node, and a storage medium. The transmission method includes determining the frame structure of a bearer frame, where the bearer frame includes a plurality of types of code blocks, the bearer frame includes a plurality of slots, the slots support a plurality of slot sizes, and a slot size is used in the determined frame structure; determining the frame structure of a multiframe including the bearer frame; and mapping target data to the multiframe for transmission.

## Description

### TECHNICAL FIELD

The present application relates to the field of communication technology, for example, a bearing method, a communication node, and a storage medium.

### BACKGROUND

In the Flexible Ethernet (FlexE) protocol standard technical specification, a method for transmitting a client service at a speed of n (n is a positive integer) * 5G (with the unit as bits/second), which can efficiently bear client services at a speed above 5 G through a FlexE physical interface.

In order to resolve the requirements of bearing client services at a speed lower than 5 G, a fine-grained frame structure has emerged. The size of sub-slots in the fine-grained frame structure may be 2 code blocks, 4 code blocks, or 8 code blocks. Therefore, how to implement the transmission of client services with different slots needs to be solved urgently.

### SUMMARY

The present application provides a bearing method, a communication node, and a storage medium.

In a first aspect, an embodiment of the present application provides a transmission method. The method includes the following.

A frame structure of a bearer frame is determined, where the bearer frame includes a plurality of types of code blocks, the bearer frame includes a plurality of slots, the plurality of slots support a plurality of slot sizes, and a slot size among the plurality of slot sizes is used in the determined frame structure.

A frame structure of a multiframe including the bearer frame is determined.

Target data is mapped to the multiframe for transmission.

In a second aspect, an embodiment of the present application provides a transmission method. The method includes the following.

Target data borne in slots of a bearer frame is acquired according to a first slot size, where the bearer frame includes a plurality of types of code blocks, the bearer frame includes a plurality of slots, and the plurality of slots support a plurality of slot sizes.

The target data in a multiframe is borne for transmission according to a second slot size, where the first slot size is not equal to the second slot size.

In a third aspect, an embodiment of the present application provides a communication node. The communication node includes one or more processors and a storage apparatus configured to store one or more programs.

The one or more programs, when executed by the one or more processors, cause the one or more processors to perform the method according to embodiments of the present application.

In a fourth aspect, an embodiment of the present application provides a storage medium for storing a computer program, where the computer program, when executed by a processor, causes the processor to perform the method according to the present application.

### BRIEF DESCRIPTION OF DRAWINGS

FIG. 1A is a diagram illustrating the scenario of an optical module combination according to an embodiment of the present application.
FIG. 1B is a diagram of a 64/66 encoding rule according to the 802.3 protocol.
FIG. 1C is a diagram illustrating the insertion of an overhead block into data according to an embodiment of the present application.
FIG. 1D is a diagram of an fg-BU frame structure according to an embodiment of the present application.
FIG. 1E is a diagram of a bearing principle according to an embodiment of the present application.
FIG. 1F is a diagram illustrating that a client service is compressed and borne according to an embodiment of the present application.
FIG. 1G is a diagram of performing bearing according to the size of two code sizes according to an embodiment of the present application.
FIG. 1H illustrates the structure of a bearer frame according to an embodiment of the present application.
FIG. 2 is a flowchart of a transmission method according to an embodiment of the present application.
FIG. 3 is a flowchart of another transmission method according to an embodiment of the present application.
FIG. 4A is a diagram illustrating the structure of a multiframe in which each slot bears 2 client code blocks.
FIG. 4B is a diagram illustrating the structure of a multiframe in which each slot bears 4 client code blocks.
FIG. 4C illustrates the structure of a bearer frame according to an embodiment of the present application.
FIG. 4D is a diagram illustrating the structure of a multiframe in which each slot bears 2 client code blocks.
FIG. 4E is a diagram illustrating the structure of a multiframe in which each slot bears 4 client code blocks.
FIG. 4F is a diagram illustrating the structure of a multiframe in which each slot bears 8 client code blocks.
FIG. 4G is a diagram illustrating the structure of a bearer frame according to an embodiment of the present application.
FIG. 4H is a diagram illustrating the structure of a multiframe in which each slot bears 2 client code blocks.
FIG. 4I is a diagram illustrating the structure of a multiframe in which each slot bears 4 client code blocks.
FIG. 4J is a diagram illustrating the structure of a multiframe in which each slot bears 8 client code blocks.
FIG. 4K is a diagram illustrating the structure of a bearer frame according to an embodiment of the present application.
FIG. 4L is a diagram illustrating the structure of a multiframe in which each slot bears 2 client code blocks.
FIG. 4M is a diagram illustrating the structure of a multiframe in which each slot bears 4 client code blocks.
FIG. 4N is a diagram illustrating the structure of a multiframe in which each slot bears 8 client code blocks.
FIG. 4O is a diagram illustrating the structure of a bearer frame according to an embodiment of the present application.
FIG. 4P is a diagram illustrating the structure of a multiframe in which each slot bears 2 client code blocks.
FIG. 4Q is a diagram illustrating the structure of a multiframe in which each slot bears 4 client code blocks.
FIG. 4R is a diagram illustrating the structure of a multiframe in which each slot bears 8 client code blocks.
FIG. 4S is a diagram illustrating the scenario of penetrating different network systems according to an embodiment of the present application.
FIG. 4T illustrates the structure of another bearer frame according to an embodiment of the present application.
FIG. 4U illustrates the structure of another bearer frame according to an embodiment of the present application.
FIG. 4W is a diagram illustrating the structure of a bearer frame bearing a client service according to an embodiment of the present application.
FIG. 4X is a diagram illustrating the structure of another bearer frame bearing a client service according to an embodiment of the present application.
FIG. 4Y is a diagram illustrating the structure of another bearer frame bearing a client service according to an embodiment of the present application.
FIG. 4Z is a diagram illustrating the structure of another bearer frame bearing a client service according to an embodiment of the present application.
FIG. 5 is a diagram illustrating the structure of another bearer frame bearing a client service according to an embodiment of the present application.
FIG. 6A is a diagram illustrating the structure of another bearer frame bearing a client service according to an embodiment of the present application.
FIG. 6B illustrates the structure of another bearer frame according to an embodiment of the present application.
FIG. 7 is a diagram illustrating the structure of a transmission apparatus according to an embodiment of the present application.
FIG. 8 is a diagram illustrating the structure of another transmission apparatus according to an embodiment of the present application.
FIG. 9 is a diagram illustrating the structure of a communication node according to an embodiment of the present application.

### DETAILED DESCRIPTION

To make the objects, technical solutions, and advantages of the present application more apparent, embodiments of the present application are described hereinafter in detail in conjunction with drawings. It is to be noted that if not in collision, the embodiments of the present application and features therein may be combined with each other in any manner.

The steps illustrated in the flowcharts among the drawings may be performed by, for example, a computer system capable of executing a set of computer-executable instructions. Moreover, although logical sequences are illustrated in the flowcharts, in some cases, the steps illustrated or described may be performed in sequences different from those described herein.

The fine-grained slicing technology for slicing packet network proposes a fine-grained frame structure, which divides a 5G-rate FlexE slot pipeline into 480 sub-slots. Each sub-slot bandwidth has a speed of 10 M and can bear a client service of 10 M and above. In the fine-grained frame structure, the size of each sub-slot is 8 code blocks. In order to reduce the delay time, a sub-slot in the fine-grained frame structure is reduced to 2 or 4 code blocks. Therefore, it is necessary to solve the scenario of fine-grained frame transmission with different sub-slot sizes of 2 code blocks, 4 code blocks, and 8 code blocks.

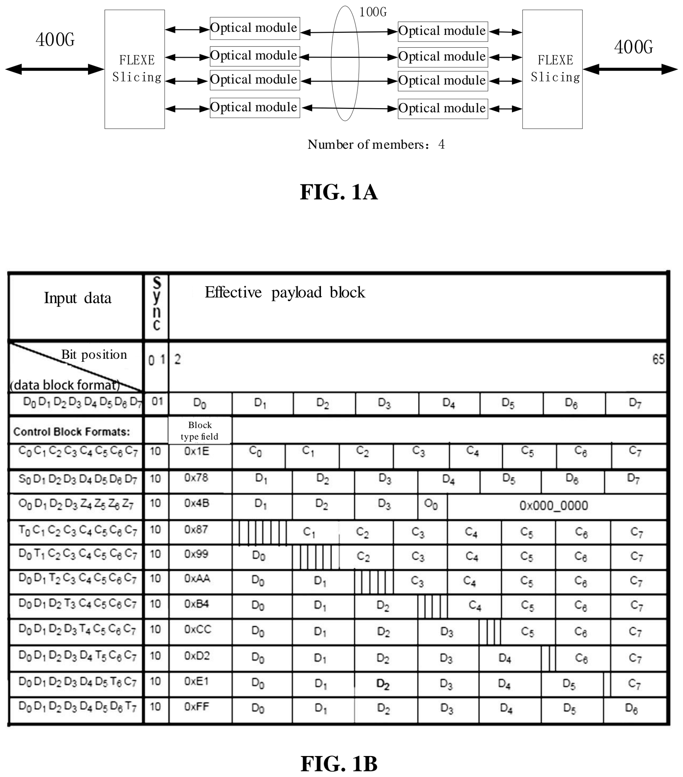

A rapid growth in user information traffic has prompted a rapid increase in the information transmission bandwidth of communication networks. The interface bandwidth speed of communication devices has increased from 10 M (unit: bit/second, the same below) to 100 M and then increased to 1 G, 10 G, and 100 G. A large number of commercial 100 G optical modules have emerged in the market. At present, 400 G optical modules have been developed, but the 400 G optical modules are expensive, exceeding the price of four 100 G optical modules, affecting the value of 400 G optical modules. In order to transmit a 400 G service on a 100 G optical module, multiple 100 G optical modules are combined by the FlexE protocol to form a high-speed transmission channel. FIG. 1A is a diagram illustrating the scenario of an optical module combination according to an embodiment of the present application. As shown in FIG. 1A, four 100 G optical modules are combined together by the FlexE protocol to form one 400 G transmission channel, which is equivalent to the transmission speed of one 400 G optical module, thereby solving the transmission requirements of 400 G services without increasing costs. For a physical layer with a 100 G rate, a 100G data packet defined by the Ethernet protocol is 64/66 encoded before being sent. A 64-bit data block is expanded into a 66-bit information block. The added 2 bits are located in the front of the 66-bit block to serve as the start flag of the 66-bit block. After that, the 100G data packet is sent out from an optical port in the form of the 66-bit block.

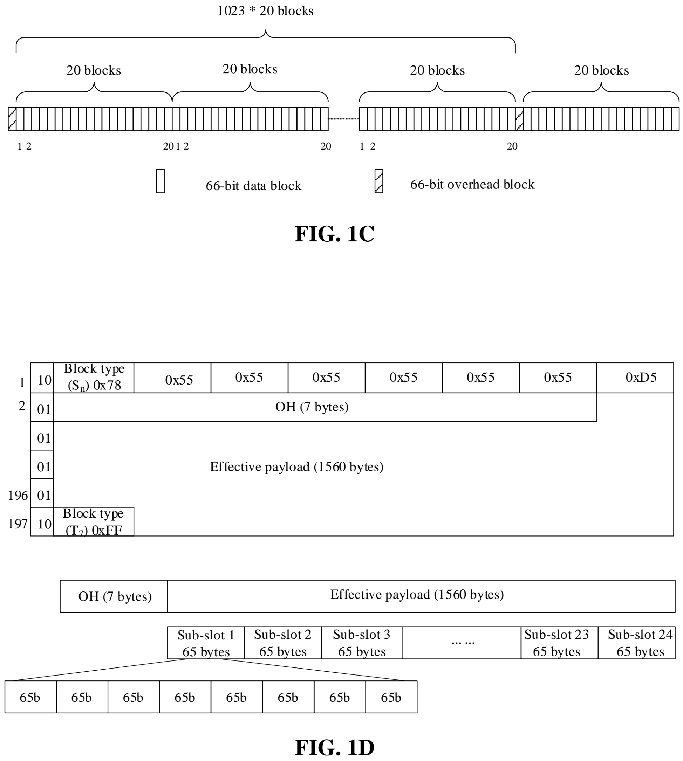

FIG. 1B is a diagram of a 64/66 encoding rule according to the 802.3 protocol. Each code block consists of 66 bits. The first 2 bits are a synchronization header of a code block. Synchronization header bits "01" indicate a D code block (data code block), and the next 8 bytes (64 bits) are 8 bytes of data content. Synchronization header bits "11" indicate a control code block. The content of the first byte immediately following indicates the type of the control block, and the content of the next 7 bytes is the content of the control block, and the content of the 7 bytes is determined by the type of the control block. Both an S code block and the T code block belong to control code blocks. The content of the first byte in the S code block is 0x78, indicating that the control code block is an S code block. A T code block is an end block and may also bear client byte content (located at the last 7 bytes in the code block). In Ethernet standards, T code blocks are divided into eight types: T0, T1, T2, T3, T4, T5, T6, and T7. A T0 code block (with the content of the first byte being 0x87) does not bear client information. A T1 code block (with the content of the first byte being 0x99) bears 1-byte client information. A T2 code block (with the content of the first byte being 0x99) bears 2-byte client information. The rest can be done in the same manner. In the reception by a T7 code block, an optical port identifies a 66-bit block from a received data stream. Then the original 64-bit data is restored from the 66-bit block, and a data packet is reassembled. For a 100 G service, each 20 66-bit data blocks are divided into a data block group. Each group has a total of 20 data blocks, indicating 20 slots. Each slot indicates the service speed of 5 G (bit/s) bandwidth. When a 66-bit data block is sent, one FlexE overhead block is inserted after each 1023 data block groups (1023 * 20 data blocks) are sent out. FIG. 1C is a diagram illustrating the insertion of an overhead block into data according to an embodiment of the present application. As shown in FIG. 1C, after each 1023 * 20 data blocks are sent out, an overhead block (corresponding to a slash filling position) is borne on one block. After one overhead block is inserted, data blocks continue being transmitted. After the second group of 1023 * 20 data blocks are sent out, another overhead block is inserted. The rest can be done in the same manner. In this case, during transmission of data blocks, an overhead block is periodically inserted. The interval between two adjacent overhead blocks is 1023 * 20 data blocks. For a physical line speed of 100 G (bit/s), a physical port is divided into 20 slots through the FlexE protocol. Therefore, the bandwidth corresponding to each time slot is 5 G. The number of slots and the bandwidth defined by the FlexE protocol can meet the requirements of bearing high-speed services. Some difficulties are encountered for multi-traffic and low-speed client services as follows: 1. A 100 G physical channel has only a total of 20 slots, and the total number of slots is excessively small; 2. The bandwidth of each slot is 5 G, and the granularity of each slot is excessively large, making a client service at a rate lower than 5 G unable to be transmitted. In some scenario fields, there are a large number of client services, with the bandwidth of each service relatively small. The number of slots is large, and the bandwidth granularity of each slot is small, causing the FlexE protocol to be unable to meet such an application scenario. In order to solve the needs of bearing a client service at a speed lower than 5 G, the fine-grained slicing technology for slicing packet network proposes a fine-grained frame structure which bears and transmits fine-grained basic unit (fg-BU) sequence in the 5 G-speed slot through the FlexE protocol. FIG. 1D is a diagram of an fg-BU frame structure according to an embodiment of the present application. Referring to FIG. 1D, one fg-BU frame structure is composed of an S block + 195 D blocks + a T block. One fg-BU frame is divided into 24 fg-BU sub-slots. 20 fg-BU frame structures form a multiframe. A total of 480 fg-BU sub-slots are included in one fine-grained multiframe. A fine-grained basic unit (fg-BU) includes an overhead portion and bears client information. Through the fine-grained basic unit, a 5 G bearer pipeline is divided into 480 sub-slots. With the overhead portion deducted, each sub-slot has a bandwidth of 10 M and can bear a client service at 10 M rate, meeting the bearing requirements of ordinary Ethernet services (multiple sub-slots may be selected to bear a client service according to the speed).

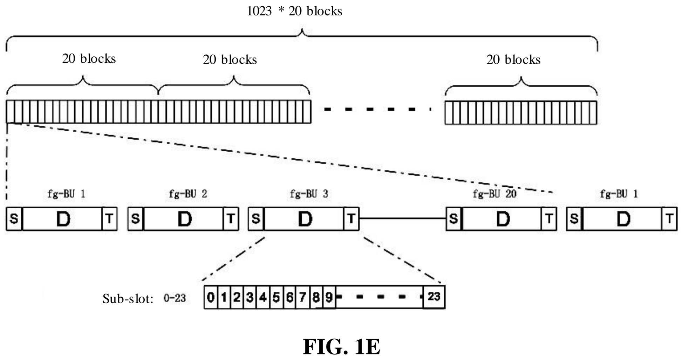

FIG. 1E is a diagram of a bearing principle according to an embodiment of the present application. For the bearing principle, refer to FIG. 1E.

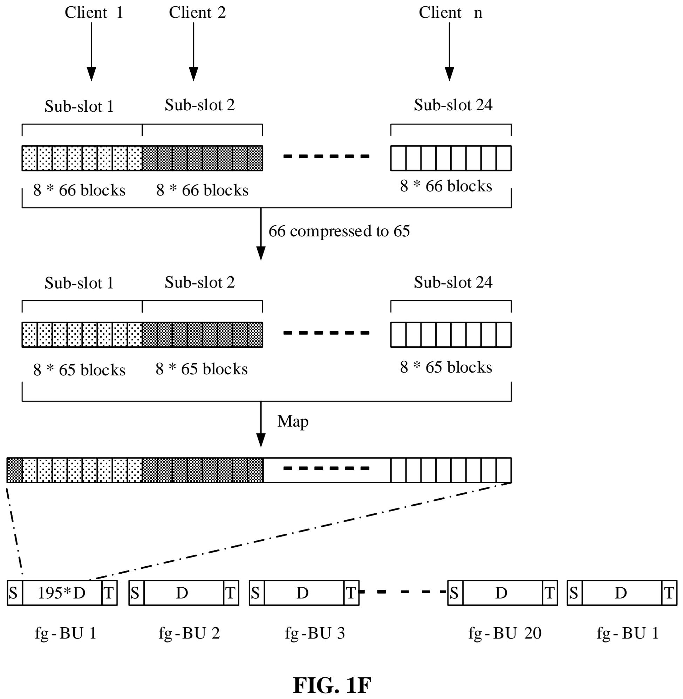

In the fine-grained basic unit, the size of each bearer sub-slot is 8 code blocks. Each code block consists of 65 bits (each 66-bit code block is compressed into 65 bits by compressing the first 2 synchronization header bits in each code block into 1 synchronization header bit). The size of each sub-slot is 8 * 65 = 520 bits. FIG. 1F is a diagram illustrating that a client service is compressed and borne according to an embodiment of the present application. When a 10 M client service is borne in a fine-grained sub-slot, the 10 M client service is 64/66 encoded first. After encoding, each eight 66-bit code blocks are borne in one slot as a group. Before bearing, each 66-bit code block is compressed to 65 bits (2 synchronization header bits are compressed to 1 bit) to form eight 65-bit code blocks and be borne in one sub-slot. 24 sub-slots are included in one fg-BU frame. Some sub-slots are selected to bear the client service. The fg-BU frame bearing the client service is then mapped to slots in the FlexE protocol and is sent out and transmitted to a remote destination device via the slots at a 5 G rate through the FlexE protocol.

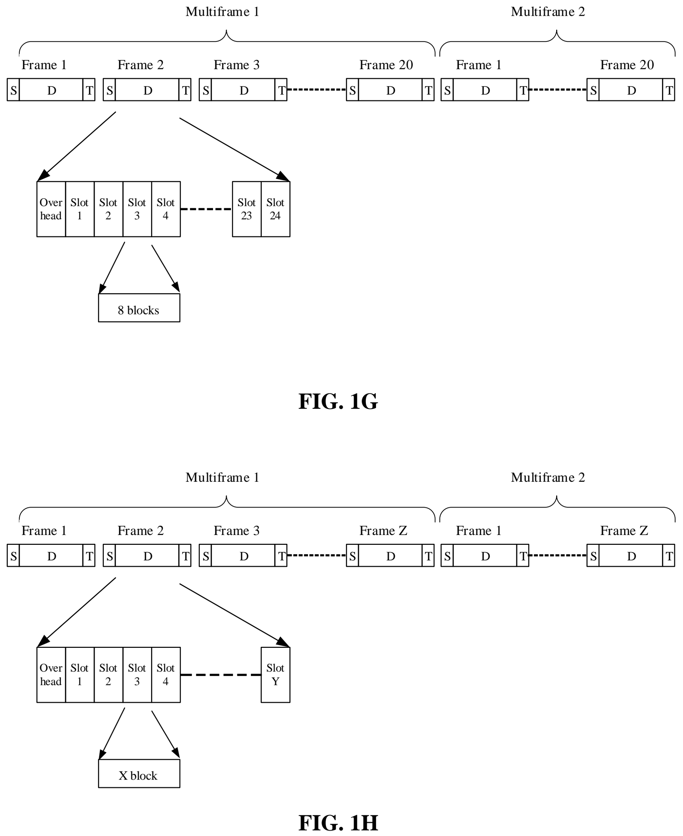

The size of each sub-slot in the fg-BU frame is 8 code blocks (actually compressed code blocks). FIG. 1G is a diagram of performing bearing according to the size of two code sizes according to an embodiment of the present application. Referring to FIG. 1G, in some scenarios in practical applications, the client service needs to be borne according to the size of two code blocks. If the client service is directly borne in each sub-slot in the fg-BU frame, it is necessary to aggregate 4 groups of 2 code blocks of client services into one sub-slot in the fg-BU frame. This approach requires waiting for 4 groups of 2 code blocks to be accumulated into 8 code blocks, thereby increasing delay time.

In the FlexE standards, a slot is used for indicating a client bearing position. In order to make a distinction, a client bearing position divided in the fg-BU frame is referred to as a sub-slot. The present application does not relate to FlexE slots but only considers the bearer frame structure of a client service. In the present application, a position where a client service is borne in a bearer frame is referred to as a slot (which is actually a sub-slot relative to a FlexE slot) to simplify the name. In some scenarios in practical applications, client services may also need to be borne according to the size of 1 code block, the size of 4 code blocks, the size of 16 code blocks, and the size of 32 code blocks. In order to adapt to scenarios of different sizes of client code blocks, a general bearer frame structure is constructed. The frame structure still consists of an S code block, multiple D code blocks, and a T code block. The structure of the frame (for example, the total length of the frame, the total number of code blocks, position sequences of code blocks, and main overhead field content) remains unchanged. Only three parameters, that is, the size of each slot in the frame, the number of slots in the frame, and the number of frames in a multiframe, are changed according to constraint conditions to implement different scenario applications. After the frame structure is determined, the size of each slot in the frame structure is set to x (the unit may be bytes, code blocks, compressed code blocks, or transcoded code blocks). The number of slots in the frame is y. z frames form a multiframe. x, y, and z are each a positive integer. The product of the two parameters x and y is fixed. The product of the two parameters y and z is fixed. The product of the two parameters x and y is constant, corresponding to the total number of pieces of client information totally borne in a frame (the unit may be bytes, code blocks, compressed code blocks, or transcoded code blocks). With the frame structure remaining constant, no matter how the slot size and the number of slots in a frame change, the total number of pieces of client information corresponding to all slots in a frame is constant, thereby guaranteeing that the length of the frame is constant. The product of the two parameters y and z is constant, corresponding to the total number of slots in a multiframe. No matter how the number of slots in a frame changes, the total number of slots in a multiframe is fixed. FIG. 1H illustrates the structure of a bearer frame according to an embodiment of the present application. FIG. 1H illustrates that multiframe 1 includes z bearer frames.

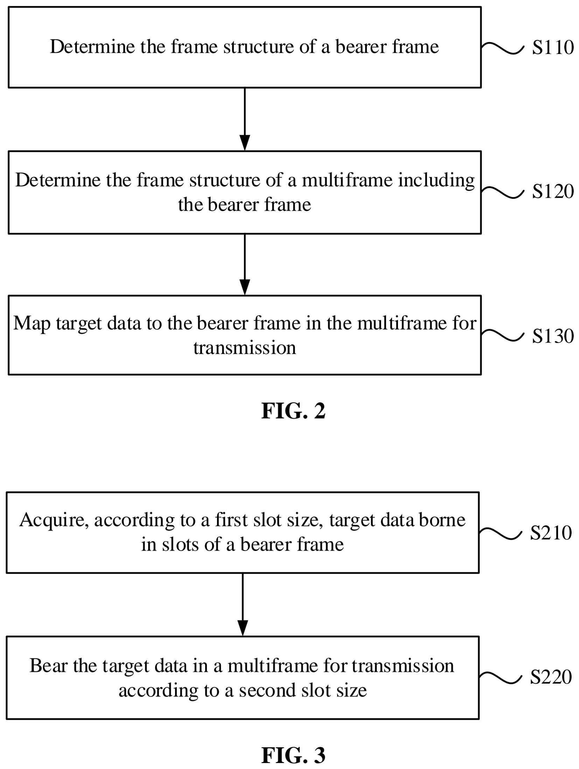

In an example embodiment, FIG. 2 is a flowchart of a transmission method according to an embodiment of the present application. Referring to FIG. 2, this embodiment includes the steps below.

In S110, the frame structure of a bearer frame is determined.

The bearer frame may be considered as a frame bearing data, such as bearing target data. The target data may be considered as the data to be borne, such as client service. The bearer frame includes a plurality of types of code blocks. The bearer frame includes a plurality of slots. The slots support a plurality of slot sizes. A slot size is used in the determined frame structure.

In order to adapt to scenarios of different sizes of client code blocks, the present application constructs a general bearer frame structure. The bearer frame includes a plurality of types of code blocks which are not limited here and may be determined based on actual scenarios. For example, the code blocks include an S code block, a plurality of D code blocks, and a T code block.

The structure of the bearer frame remains unchanged. Three parameters, namely, the size of each slot in the frame, the number of slots in the frame, and the number of frames in a multiframe, are changed. Since the slot size may be changed, the bearer frame supports a plurality of slot sizes. The bearer frame can use only one slot size for bearing data each time. The selection of the slot size is not limited and may be determined according to the usage scenario of a communication node. The slot size of the bearer frame may be associated with the size of a client code block. For example, the slot size of the bearer frame is equal to the size of a client code block. In the case where the size of a client code block is 2, the slot size of the bearer frame may be 2.

The structure of the bearer frame is guaranteed to remain unchanged by adjusting the variable slot size in the bearer frame, the number of slots in the bearer frame, and the number of bearer frames included in the multiframe.

In this embodiment, the number of slots may be determined based on the slot size. The number of bearer frames in the multiframe may be determined based on the number of slots.

The step of determining the structure of the bearer frame may include at least determining the slot size and the number of slots in the bearer frame.

The slot size may be constrained through a communication scenario. The slot size, the number of slots, and the number of bearer frames in the multiframe may be considered as parameters associated with the total number of pieces of information borne in the bearer frame and the total number of slots in the frame. No matter how the slot size of a bearer frame changes, the total number of pieces of information borne in the bearer frame and the total number of slots in the multiframe can be guaranteed to be fixed.

In S120, the frame structure of the multiframe including the bearer frame is determined.

The determination of the structure of the multiframe in this step may include at least determining the number of bearer frames in the multiframe. The number of bearer frames in the multiframe may be determined through the slot size, such as indirectly determined through the slot size. The number of slots in the bearer frame is determined through the slot size, and then the number of bearer frames in the multiframe is determined based on the number of slots in the bearer frame.

It is to be noted that the slot size, the number of slots in the bearer frame, and the number of bearer frames in the multiframe may be associated with a communication standard and/or a communication scenario. A fixed slot size, the fixed number of slots in the bearer frame, and the fixed number of bearer frames in the multiframe may be used in a certain communication standard. The fixed slot size, the fixed number of slots in the bearer frame, and the fixed number of bearer frames in the multiframe may be predetermined and directly used in the communication process. In steps S110 and S120, a predetermined result may be acquired directly; for example, a predetermined slot size may be acquired.

In S130, the target data is mapped to the bearer frame in the multiframe for transmission.

The target data may be considered as the client service to be borne in the multiframe for transmission. The target data is mapped to the slots in the bearer frame in the multiframe for transmission.

The slots in the bearer frame in this embodiment of the present application support a plurality of slot sizes. In the communication process, only one slot size may be used for determining the structure of the bearer frame and the structure of the multiframe. The formed multiframe can support multiple communication scenarios. In a fixed communication scenario, such as a non-penetration scenario with no change in the slot size, a fixed slot size is used for communication, implementing the transmission of the target data in the scenario. Since the multiframe supports variable slot sizes, the scenario of the target data is implemented in another communication scenario corresponding to another slot size. The communication scenario corresponding to another slot size may be that a client code block in the communication scenario corresponds to another slot size.

Based on the preceding embodiment, variant embodiments of the preceding embodiment are provided. It is to be noted that for ease of description, only differences from the preceding embodiment are described in the variant embodiments.

In an embodiment, the product of the slot size in the bearer frame and the number of slots in the bearer frame is fixed, and the product of the number of slots in the bearer frame and the number of bearer frames in the multiframe is fixed.

In the present application, for ease of description, the slot size in the bearer frame, the number of slots in the bearer frame, and the number of bearer frames in the multiframe may be denoted as x, y, and z respectively.

In this embodiment, the product of x and y and the product of y and z are fixed to guarantee the total number of pieces of information borne in the bearer frame and the total number of slots in the multiframe.

In an embodiment, the code blocks include a start code block (that is, an S code block), data code blocks (that is, D code blocks), and an end code block (that is, a T code block). The bearer frame includes an overhead field. The overhead field is borne in a data code block of the data code blocks, the start code block, or the end code block. The overhead field indicates the number of bearer frames in the multiframe and the positions of the bearer frames in the multiframe.

The bearer frame consists of the S code block, the multiple D code blocks, and the T code block. Overhead bytes are included in the bearer frame. If the S code block bears no client code block, the length of the overhead bytes is equal to the bearing length of the T code block, which is equivalent to that the T code block bears no client code block. This case is equivalent to only the D code blocks in the bearer frame bear a client code block, with the S code block and the T code block bearing no client code block. In this case, the bearing rate of the bearer frame = the number of D code blocks/(the number of D code blocks + 2). When the client code block is not compressed and the overhead bytes are borne in the D code blocks, the number of D code blocks needs to be greater than 180 when the 4.8G client service needs to be borne in the bandwidth of 5G.

The overhead field is defined in the bearer frame. The number of frames in the multiframe (such as the number of bearer frames in the multiframe) and the sequence relationship of each frame (such as the position of the bearer frame in the multiframe) are set in the content of the overhead field. For example, information indicating the structure of the multiframe, such as a multiframe indication (MFI) or a multiframe alignment signal (MFAS), is set in the overhead field. Multiframe information borne in all frames changes periodically. Multiframe information indicates the sequence relationship of the current frame in the multiframe and changes once per period to indicate the size of one multiframe. For example, multiframe information MFI is composed of 5 bits. The MFI of the first frame = 00000, the MFI of the second frame = 00001, the MFI of the third frame = 00010, the MFI of the fourth frame = 00011, ..., the MFI of the 32nd frame = 11111, the MFI of the 33rd frame = 00000, the MFI of the 34th frame = 00001, .... The MFI value in each frame changes. The first frame whose MFI = 00000 to the 32nd frame whose MFI = 11111 form one multiframe, indicating that 32 frames form one multiframe. The MFI value changes periodically. In the next cycle, frames whose MFI = 00000 to MFI = 11111 form another multiframe. When each MFI is composed of 5 bits, a maximum of 32 frames form one multiframe. If each MFI is composed of 3 bits, a maximum of 8 form one multiframe, with MFIs varying from 000 to 111. The number of MFI bits may be defined as 5. When all 5 bits are used, it indicates that 32 frames form one multiframe, with MFIs varying from 00000 to 11111. When only the lower 3 bits are valid, it may indicate that 8 frames form one multiframe, with MFIs varying from xx000 to xx111 (with the content of the upper two bits ignored). Different numbers of MFI bits can indicate multiframe structures of different sizes.

In an embodiment, the overhead field is located in the first data code block among the data code blocks. The bearer region of the bearer frame includes data code blocks other than the first data code block, the region in the first data code block other than the region where the overhead field is mapped, and the region in the end code block other than the region where an end block is located. The target data is borne in the bearer region.

In this embodiment, the overhead field is located in a D code block, that is, the first D code block. The last byte in the first D code block (that is, the region in the first data code block other than the region where the overhead field is mapped), all (for example, 8) bytes in all subsequent D code blocks (that is, the data code blocks other than the first data code block), and the last 7 bytes in the last T code block (that is, the region in the end code block other than the region where the end block is located) form the bearer region of the bearer frame.

The bearer region may be considered as an idle region where client service can be mapped in the bearer frame. Since the first data code block is used for bearing the overhead field, the bearer region includes the data code blocks other than the first data code block and the region where the overhead field is not mapped in the first data code block. As the end code block needs to include the end block, the region in the end code block other than the end block may be used as the bearer region.

In an embodiment, the bearer region of the bearer frame includes the data code blocks, the region in the start code block other than the region where the overhead field is located and the region where a start block is located, and the region in the end code block other than the region where the end block is located.

In an embodiment, the bearer region of the bearer frame includes the data code blocks, the region in the start code block other than the region where the overhead field is located, and the region in the end code block other than the region where the end block is located.

In this embodiment, the overhead field may be located in the start code block. Therefore, the bearer region includes all the data code blocks, the region in the bearer region other than the region where the overhead field is mapped and the region where the start block is located, and the region in the end code block other than the region where the end block is located.

In an embodiment, the bearer frame meets one or more of the conditions below.

The number of code blocks included in the bearer region of the bearer frame is i times the first value; the number of code blocks in the target data is i times the second value; the first value is determined based on the length of a code block in the target data; and the second value is determined based on the length of a code block in the bearer region.

The number of slots corresponding to the target data is a factor of the total number of slots in the multiframe.

How to determine the first value and the second value is not limited in this embodiment. For example, the first value is the length of a code block in the target data, and the second value is the length of a code block in the bearer region. Alternatively, the first value is a value obtained by calculating the length of a code block in the target data, and the second code block is a value obtained by calculating the length of a code block in the bearer region.

Exemplarily, the length of the bearer frame needs to satisfy several principles. In principle one, the number of D code blocks in the selected bearer frame is a, and b client code blocks may be borne in the a D code blocks. 64 bearer bits exist in one D code block. The length of a client code block is 66 bits. Appropriate a and b parameters satisfying that a * 64 = b * 66 (a and b are each a positive integer) are selected so that the b client code blocks can be borne in the a D code blocks. The formula is reduced as that a * 32 = b * 33. a and b are searched for. To satisfy the formula, a and b must be a multiple of 33 and a multiple of 32 respectively. Therefore, the further equivalent alternative formula of the preceding formula is that (n * 33) * 32 = (n * 32) * 33. That is, a = n * 33, and b = n * 32. n is a positive integer (that is, the number of code blocks is i times the first value; the number of code blocks in the target data is i times the second value; the first value is determined based on the length of a code block in the target data; and the second value is the length of a code block in the bearer region). In principle two, if each slot has 2 code blocks, b/2 slots exist at b code block positions in the frame. When the total number of slots is 480, the b/2 slots in each frame must be a factor of 480 (that is, the number of slots corresponding to the target data is a factor of the total number of slots in the multiframe). In principle three, in the case of a maximum of 480 slots in each frame, if each frame has b/2 slots, then b/2 is not greater than 480. That is, n * 16 is not greater than 480 (that is, the number of slots corresponding to the target data is not greater than the total number of slots in the multiframe). In principle four, the efficiency of the bearer frame requires that the number of D code blocks is greater than 180, and a = (n * 33) which is greater than 180.

In an embodiment, the first value is the length of a code block in the target data, and the second value is the length of a code block in the bearer region.

Alternatively, the first value is the length of the target data divided by a common divisor, and the second value is the length of a code block in the bearer region divided by the common divisor. The common divisor is a common divisor of the length of the target data and the length of a code block in the bearer region (for example, a = n * 33, and b = n * 32).

In an embodiment, in the case where the start code block bears no overhead, the bearer frame includes 1 start code block, 198 data code blocks, and 1 end code block; and the length of a code block in the target data is 66 bits. In the case where the start code block bears overhead, the bearer frame includes 1 start code block, 197 data code blocks, and 1 end code block; and the length of a code block in the target data is 66 bits.

In an embodiment, the slot size is x code blocks. The number of slots in the bearer frame is y. The product of x and y is 192. x and y are each a positive integer.

In an embodiment, the slot size is 2 code blocks. The number of slots in the bearer frame is 96. The multiframe consists of 5 bearer frames.

Alternatively, the slot size is 4 code blocks. The number of slots in the bearer frame is 48. The multiframe consists of 10 bearer frames.

Alternatively, the slot size is 8 code blocks. The number of slots in the bearer frame is 24. The multiframe consists of 20 bearer frames.

In an embodiment, in the case where the start code block bears no overhead, the bearer frame includes 1 start code block, 330 data code blocks, and 1 end code block; and the length of a code block in the target data is 66 bits.

In the case where the start code block bears overhead, the bearer frame includes 1 start code block, 329 data code blocks, and 1 end code block; and the length of a code block in the target data is 66 bits.

In an embodiment, the slot size is x code blocks. The number of slots in the bearer frame is y. The product of x and y is 320. x and y are each a positive integer.

In an embodiment, the slot size is 2 code blocks. The number of slots in the bearer frame is 160. The multiframe consists of 3 bearer frames.

Alternatively, the slot size is 4 code blocks. The number of slots in the bearer frame is 80. The multiframe consists of 6 bearer frames.

Alternatively, the slot size is 8 code blocks. The number of slots in the bearer frame is 40. The multiframe consists of 12 bearer frames.

In an embodiment, in the case where the start code block bears no overhead, the bearer frame includes 1 start code block, 495 data code blocks, and 1 end code block.

In the case where the start code block bears overhead, the bearer frame includes 1 start code block, 494 data code blocks, and 1 end code block.

In an embodiment, the slot size is x code blocks. The number of slots in the bearer frame is y. The product of x and y is 480. x and y are each a positive integer.

In an embodiment, the slot size is 2 code blocks. The number of slots in the bearer frame is 240. The multiframe consists of 2 bearer frames.

Alternatively, the slot size is 4 code blocks. The number of slots in the bearer frame is 120. The multiframe consists of 4 bearer frames.

Alternatively, the slot size is 8 code blocks. The number of slots in the bearer frame is 60. The multiframe consists of 8 bearer frames.

In an embodiment, in the case where the start code block bears no overhead, the bearer frame includes 1 start code block, 990 data code blocks, and 1 end code block; and the length of a code block in the target data is 66 bits.

In the case where the start code block bears overhead, the bearer frame includes 1 start code block, 989 data code blocks, and 1 end code block; and the length of a code block in the target data is 66 bits.

In an embodiment, the slot size is x code blocks. The number of slots in the bearer frame is y. The product of x and y is 960. x and y are each a positive integer.

In an embodiment, the slot size is 2 code blocks. The number of slots in the bearer frame is 480. The multiframe consists of 1 bearer frame.

Alternatively, the slot size is 4 code blocks. The number of slots in the bearer frame is 240. The multiframe consists of 2 bearer frames.

Alternatively, the slot size is 8 code blocks. The number of slots in the bearer frame is 120. The multiframe consists of 4 bearer frames.

In an embodiment, in the case where the start code block bears no overhead, the bearer frame includes 1 start code block, 65 data code blocks, and 1 end code block; and the length of a code block in the target data is 65.

In the case where the start code block bears overhead, the bearer frame includes 1 start code block, 64 data code blocks, and 1 end code block; and the length of a code block in the target data is 65.

In an embodiment, the slot size is x code blocks. The number of slots in the bearer frame is y. The product of x and y is 64. x and y are each a positive integer.

In an embodiment, the slot size is 2 code blocks. The number of slots in the bearer frame is 32. The multiframe consists of 15 bearer frames.

Alternatively, the slot size is 4 code blocks. The number of slots in the bearer frame is 16. The multiframe consists of 30 bearer frames.

Alternatively, the slot size is 8 code blocks. The number of slots in the bearer frame is 8. The multiframe consists of 60 bearer frames.

In an embodiment, in the case where the start code block bears no overhead, the bearer frame includes 1 start code block, 195 data code blocks, and 1 end code block; and the length of a code block in the target data is 65.

In the case where the start code block bears overhead, the bearer frame includes 1 start code block, 194 data code blocks, and 1 end code block; and the length of a code block in the target data is 65.

In an embodiment, the slot size is x code blocks. The number of slots in the bearer frame is y. The product of x and y is 192. x and y are each a positive integer.

In an embodiment, the slot size is 2 code blocks. The number of slots in the bearer frame is 96. The multiframe consists of 5 bearer frames.

Alternatively, the slot size is 4 code blocks. The number of slots in the bearer frame is 48. The multiframe consists of 10 bearer frames.

Alternatively, the slot size is 8 code blocks. The number of slots in the bearer frame is 24. The multiframe consists of 20 bearer frames.

In an embodiment, in the case where the start code block bears no overhead, the bearer frame includes 1 start code block, 325 data code blocks, and 1 end code block; and the length of a code block in the target data is 65 code blocks.

In the case where the start code block bears overhead, the bearer frame comprises 1 start code block, 324 data code blocks, and 1 end code block; and the length of a code block in the target data is 65 code blocks.

In an embodiment, the slot size is x code blocks. The number of slots in the bearer frame is y. The product of x and y is 320. x and y are each a positive integer.

In an embodiment, the slot size is 2 code blocks. The number of slots in the bearer frame is 160. The multiframe consists of 3 bearer frames.

Alternatively, the slot size is 4 code blocks. The number of slots in the bearer frame is 80. The multiframe consists of 6 bearer frames.

Alternatively, the slot size is 8 code blocks. The number of slots in the bearer frame is 40. The multiframe consists of 12 bearer frames.

In an embodiment, the target data borne in the slots of the bearer frame is acquired according to a first slot size.

The bearer frame bearing the target data is received.

An idle code block between bearer frames is restored to an original idle distribution status according to a set rule.

The target data is extracted from the bearer frame according to the first slot size.

The clock information of the target data is restored based on the idle code block and a local clock.

In an embodiment, the set rule includes one of the following.

A first fixed number of idle code blocks are inserted between adjacent bearer frames.

A second fixed number of idle code blocks are inserted periodically after every fixed number of bearer frames.

A third fixed number of idle code blocks are inserted in one multiframe period.

In an embodiment, 1 start code block, 1 end code block, and 198 data code blocks are provided.

The slot size is x code blocks. The number of slots in the bearer frame is y. The product of x and y is 192. x and y are each a positive integer.

In an embodiment, 1 start code block, 1 end code block, and 330 data code blocks are provided.

The slot size is x code blocks. The number of slots in the bearer frame is y. The product of x and y is 320. x and y are each a positive integer.

In an embodiment, the slot size is 1 code block, and the number of slots in the bearer frame is 320; the slot size is 2 code blocks, and the number of slots in the bearer frame is 160; the slot size is 4 code blocks, and the number of slots in the bearer frame is 80; and the slot size is 8 code blocks, and the number of slots in the bearer frame is 40.

In an embodiment, 1 start code block, 1 end code block, and 495 data code blocks are provided.

The slot size is x code blocks. The number of slots in the bearer frame is y. The product of x and y is 480. x and y are each a positive integer.

In an embodiment, 1 start code block, 1 end code block, and 990 data code blocks are provided.

The slot size is x code blocks. The number of slots in the bearer frame is y. The product of x and y is 960. x and y are each a positive integer.

In an embodiment, 1 start code block, 1 end code block, and 195 data code blocks are provided.

The slot size is x code blocks. The number of slots in the bearer frame is y. The product of x and y is 192. x and y are each a positive integer.

In an embodiment, 1 start code block, 1 end code block, and 65 data code blocks are provided.

The slot size is x code blocks. The number of slots in the bearer frame is y. The product of x and y is 64. x and y are each a positive integer.

In an embodiment, 1 start code block, 1 end code block, and 195 data code blocks are provided.

The slot size is x code blocks. The number of slots in the bearer frame is y. The product of x and y is 192. x and y are each a positive integer.

In an embodiment, 1 start code block, 1 end code block, and 325 data code blocks are provided.

The slot size is x code blocks. The number of slots in the bearer frame is y. The product of x and y is 320. x and y are each a positive integer.

In an embodiment, the slot size includes one or more of 2 code blocks, 4 code blocks, or 8 code blocks.

In an embodiment, the length of a code block in the target data includes 66 bits, 65 bits, or 257 bits.

In an embodiment, determining the frame structure of the bearer frame includes the following.

The slot size used in the bearer frame is determined, that is, x used in communication is determined.

The number of slots in the bearer frame is determined, that is, y used in communication is determined.

In an embodiment, determining the frame structure of the multiframe including the bearer frame includes the following.

The number of bearer frames included in the multiframe is determined, that is, z is determined.

In an embodiment, mapping the target data to the bearer frame in the multiframe for transmission includes the following.

The target data is mapped to the bearer frame.

An idle code block is inserted between bearer frames according to a set rule.

The bearer frame is transmitted.

In an embodiment, the set rule is not limited as long as both parties of the communication are unified.

In an embodiment, the set rule includes one of the following.

A first fixed number of idle code blocks are inserted between adjacent bearer frames.

A second fixed number of idle code blocks are inserted periodically after every fixed number of bearer frames.

A third fixed number of idle code blocks are inserted in one multiframe period.

The value of the first fixed number, the value of the second fixed number, and the value of the third fixed number are not limited.

In an embodiment, the method further includes that the bearer frame bearing the target data is received.

An idle code block between bearer frames is restored to an original idle distribution status according to a set rule.

The target data is extracted from the bearer frame.

The clock information of the target data is restored based on the idle code blocks and a local clock.

The idle distribution status may be considered as the distribution status of the idle code block. The original distribution status may be considered as the distribution status of the idle code block in the bearer frame according to the set rule when a source device sends the bearer frame bearing the target data. The source device may be considered as a device that sends the source of the target data. For example, the source device communicates with a sink device to transmit the target data which may be relayed through an intermediate device. The intermediate device may be considered as a device that performs intermediate forwarding during the communication process between the source device and the sink device.

The method of recovering the clock information is not limited. For example, the method may be determined algorithmically.

In an example embodiment, FIG. 3 is a flowchart of another transmission method according to an embodiment of the present application. Referring to FIG. 3, the present application is applicable to the case of implementing the transmission of client service with different slot sizes. The method is performed by a transmission apparatus. The transmission apparatus may be performed by software and/or hardware and may be integrated in a communication node. FIG. 2 illustrates a technical solution where the target data is borne and transmitted in a scenario in which communication is performed with a fixed slot size. This embodiment shows a technical solution where the target data is borne and transmitted in a scenario in which the slot size changes. A change in the slot size may be that the slot size of the network where the communication node acquires data is different from the slot size of the network where the communication node sends data. As shown in FIG. 3, this embodiment includes the steps below.

In S210, target data borne in slots of a bearer frame is acquired according to a first slot size.

The bearer frame includes a plurality of types of code blocks. The bearer frame includes a plurality of slots. The slots support a plurality of slot sizes.

In S220, the target data is borne in a multiframe for transmission according to a second slot size.

The first slot size is not equal to the second slot size. In this embodiment, the communication node, in a penetration scenario, can acquire the target data according to the first slot size and then send the target data according to the second slot size. In the case where the first slot size is smaller than the second slot size, the splicing of the target data can be performed. In the case where the first slot size is greater than the second slot size, the splitting of the target data can be performed.

In the transmission method provided in this embodiment, the target data is acquired by using the first slot size, and the target data is borne and transmitted by using the second slot size, thereby implementing the transmission of client service with different slot sizes in a penetration scenario where the communication node performs communication in two networks corresponding to different slot sizes. The networks corresponding to different slot sizes may include a first network with a client code block having the first slot size, that is, network 1, and a second network with a client code block having the second slot size, that is, network 2.

Based on the preceding embodiment, variant embodiments of the preceding embodiment are provided. It is to be noted that for ease of description, only differences from the preceding embodiment are described in the variant embodiments. For details not described in this embodiment, reference may be made to the preceding embodiment.

In an embodiment, the first slot size is smaller than the second slot size. That the target data is borne in the multiframe for transmission according to the second slot size includes the following.

The target data acquired from j slots is spliced and borne in the multiframe for transmission. The slot size of the spliced target data is the second slot size. j is a ratio of the second slot size to the first slot size.

In an embodiment, the first slot size includes 2 or 4, and the second slot size includes 4 or 8.

In an embodiment, the target data is acquired from the bearer frame according to the size of 2 code blocks. The target data in every 4 slots is spliced into 8 code blocks and then is borne and sent in the bearer frame. In an embodiment, the target data is acquired from the bearer frame according to the size of 8 code blocks. After 8 code blocks is split into 4 code blocks, the target data corresponding to each split code block is borne and transmitted in the bearer frame.

In an embodiment, the first slot size is greater than the second slot size. That the target data is borne in the multiframe for transmission according to the second slot size includes the following.

The target data in one slot is split into k pieces of target data in the second slot size. k is a ratio of the first slot size to the second slot size.

The split target data is borne in the multiframe for transmission.

In an embodiment, the first slot size includes 4 or 8, and the second slot size includes 2 or 4.

In an embodiment, the product of the slot size in the bearer frame and the number of slots in the bearer frame is fixed, and the product of the number of slots in the bearer frame and the number of bearer frames in the multiframe is fixed.

In an embodiment, the code blocks include a start code block, data code blocks, and an end code block. The bearer frame includes an overhead field. The overhead field is borne in one of the data code blocks, the start code block, or the end code block. The overhead field indicates the number of bearer frames in the multiframe and the position of the bearer frame in the multiframe.

In an embodiment, the overhead field is located in the first data code block among the data code blocks. The bearer region of the bearer frame includes data code blocks other than the first data code block, the region in the first data code block other than the region where the overhead field is mapped, and the region in the end code block other than the region where an end block is located. The target data is borne in the bearer region.

In an embodiment, the bearer region of the bearer frame includes the data code blocks, the region in the start code block other than the region where the overhead field is located, and the region in the end code block other than the region where the end block is located.

In an embodiment, the bearer frame meets one or more of the conditions below.

The number of code blocks included in the bearer region of the bearer frame is i times the first value; the number of code blocks in the target data is i times the second value; the first value is determined based on the length of a code block in the target data; and the second value is determined based on the length of a code block in the bearer region.

The number of slots corresponding to the target data is a factor of the total number of slots in the multiframe.

In an embodiment, the first value is the length of a code block in the target data, and the second value is the length of a code block in the bearer region.

Alternatively, the first value is the length of the target data divided by a common divisor. The second value is the length of a code block in the bearer region divided by the common divisor. The common divisor is a common divisor of the length of the target data and the length of a code block in the bearer region.

In an embodiment, in the case where the start code block bears no overhead, the bearer frame includes 1 start code block, 198 data code blocks, and 1 end code block; and the length of a code block in the target data is 66 bits. In the case where the start code block bears overhead, the bearer frame includes 1 start code block, 197 data code blocks, and 1 end code block; and the length of a code block in the target data is 66 bits.

In an embodiment, the slot size is x code blocks. The number of slots in the bearer frame is y. The product of x and y is 192. x and y are each a positive integer.

In an embodiment, the slot size is 2 code blocks. The number of slots in the bearer frame is 96. The multiframe consists of 5 bearer frames.

Alternatively, the slot size is 4 code blocks. The number of slots in the bearer frame is 48. The multiframe consists of 10 bearer frames.

Alternatively, the slot size is 8 code blocks. The number of slots in the bearer frame is 24. The multiframe consists of 20 bearer frames.

In an embodiment, in the case where the start code block bears no overhead, the bearer frame includes 1 start code block, 330 data code blocks, and 1 end code block; and the length of a code block in the target data is 66 bits.

In the case where the start code block bears overhead, the bearer frame includes 1 start code block, 329 data code blocks, and 1 end code block; and the length of a code block in the target data is 66 bits.

In an embodiment, the slot size is x code blocks. The number of slots in the bearer frame is y. The product of x and y is 320. x and y are each a positive integer.

In an embodiment, the slot size is 2 code blocks. The number of slots in the bearer frame is 160. The multiframe consists of 3 bearer frames.

Alternatively, the slot size is 4 code blocks. The number of slots in the bearer frame is 80. The multiframe consists of 6 bearer frames.

Alternatively, the slot size is 8 code blocks. The number of slots in the bearer frame is 40. The multiframe consists of 12 bearer frames.

In an embodiment, in the case where the start code block bears no overhead, the bearer frame includes 1 start code block, 495 data code blocks, and 1 end code block.

In the case where the start code block bears overhead, the bearer frame includes 1 start code block, 494 data code blocks, and 1 end code block.

In an embodiment, the slot size is x code blocks. The number of slots in the bearer frame is y. The product of x and y is 480. x and y are each a positive integer.

In an embodiment, the slot size is 2 code blocks. The number of slots in the bearer frame is 240. The multiframe consists of 2 bearer frames.

Alternatively, the slot size is 4 code blocks. The number of slots in the bearer frame is 120. The multiframe consists of 4 bearer frames.

Alternatively, the slot size is 8 code blocks. The number of slots in the bearer frame is 60. The multiframe consists of 8 bearer frames.

In an embodiment, in the case where the start code block bears no overhead, the bearer frame includes 1 start code block, 990 data code blocks, and 1 end code block; and the length of a code block in the target data is 66 bits.

In the case where the start code block bears overhead, the bearer frame includes 1 start code block, 989 data code blocks, and 1 end code block; and the length of a code block in the target data is 66 bits.

In an embodiment, the slot size is x code blocks. The number of slots in the bearer frame is y. The product of x and y is 960. x and y are each a positive integer.

In an embodiment, the slot size is 2 code blocks. The number of slots in the bearer frame is 480. The multiframe consists of 1 bearer frame.

Alternatively, the slot size is 4 code blocks. The number of slots in the bearer frame is 240. The multiframe consists of 2 bearer frames.

Alternatively, the slot size is 8 code blocks. The number of slots in the bearer frame is 120. The multiframe consists of 4 bearer frames.

In an embodiment, in the case where the start code block bears no overhead, the bearer frame includes 1 start code block, 65 data code blocks, and 1 end code block; and the length of a code block in the target data is 65.

In the case where the start code block bears overhead, the bearer frame includes 1 start code block, 64 data code blocks, and 1 end code block; and the length of a code block in the target data is 65.

In an embodiment, the slot size is x code blocks. The number of slots in the bearer frame is y. The product of x and y is 64. x and y are each a positive integer.

In an embodiment, the slot size is 2 code blocks. The number of slots in the bearer frame is 32. The multiframe consists of 15 bearer frames.

Alternatively, the slot size is 4 code blocks. The number of slots in the bearer frame is 16. The multiframe consists of 30 bearer frames.

Alternatively, the slot size is 8 code blocks. The number of slots in the bearer frame is 8. The multiframe consists of 60 bearer frames.

In an embodiment, in the case where the start code block bears no overhead, the bearer frame includes 1 start code block, 195 data code blocks, and 1 end code block; and the length of a code block in the target data is 65.

In the case where the start code block bears overhead, the bearer frame includes 1 start code block, 194 data code blocks, and 1 end code block; and the length of a code block in the target data is 65.

In an embodiment, the slot size is x code blocks. The number of slots in the bearer frame is y. The product of x and y is 192. x and y are each a positive integer.

In an embodiment, the slot size is 2 code blocks. The number of slots in the bearer frame is 96. The multiframe consists of 5 bearer frames.

Alternatively, the slot size is 4 code blocks. The number of slots in the bearer frame is 48. The multiframe consists of 10 bearer frames.

Alternatively, the slot size is 8 code blocks. The number of slots in the bearer frame is 24. The multiframe consists of 20 bearer frames.

In an embodiment, in the case where the start code block bears no overhead, the bearer frame includes 1 start code block, 325 data code blocks, and 1 end code block; and the length of a code block in the target data is 65 code blocks.

In the case where the start code block bears overhead, the bearer frame comprises 1 start code block, 324 data code blocks, and 1 end code block; and the length of a code block in the target data is 65 code blocks.

In an embodiment, the slot size is x code blocks. The number of slots in the bearer frame is y. The product of x and y is 320. x and y are each a positive integer.

In an embodiment, the slot size is 2 code blocks. The number of slots in the bearer frame is 160. The multiframe consists of 3 bearer frames.

Alternatively, the slot size is 4 code blocks. The number of slots in the bearer frame is 80. The multiframe consists of 6 bearer frames.

Alternatively, the slot size is 8 code blocks. The number of slots in the bearer frame is 40. The multiframe consists of 12 bearer frames.

In an embodiment, 1 start code block, 1 end code block, and 198 data code blocks are provided.

The slot size is x code blocks. The number of slots in the bearer frame is y. The product of x and y is 192. x and y are each a positive integer.

In an embodiment, 1 start code block, 1 end code block, and 330 data code blocks are provided.

The slot size is x code blocks. The number of slots in the bearer frame is y. The product of x and y is 320. x and y are each a positive integer.

In an embodiment, 1 start code block, 1 end code block, and 495 data code blocks are provided.

The slot size is x code blocks. The number of slots in the bearer frame is y. The product of x and y is 480. x and y are each a positive integer.

In an embodiment, 1 start code block, 1 end code block, and 990 data code blocks are provided.

The slot size is x code blocks. The number of slots in the bearer frame is y. The product of x and y is 960. x and y are each a positive integer.

In an embodiment, 1 start code block, 1 end code block, and 195 data code blocks are provided.

The slot size is x code blocks. The number of slots in the bearer frame is y. The product of x and y is 192. x and y are each a positive integer.

In an embodiment, 1 start code block, 1 end code block, and 65 data code blocks are provided.

The slot size is x code blocks. The number of slots in the bearer frame is y. The product of x and y is 64. x and y are each a positive integer.

In an embodiment, 1 start code block, 1 end code block, and 195 data code blocks are provided.

The slot size is x code blocks. The number of slots in the bearer frame is y. The product of x and y is 192. x and y are each a positive integer.

In an embodiment, 1 start code block, 1 end code block, and 325 data code blocks are provided.

The slot size is x code blocks. The number of slots in the bearer frame is y. The product of x and y is 320. x and y are each a positive integer.

In an embodiment, the slot size includes one or more of 2 code blocks, 4 code blocks, or 8 code blocks.

In an embodiment, the length of a code block in the target data includes 66 bits, 65 bits, or 257 bits.

The present application is described exemplarily hereinafter. The transmission method provided in the present application may be regarded as a client service bearing manner with different slot sizes. The present application relates to a client service bearing manner of different slot sizes and, in particular, to a method of transmitting a client service between a slot frame structure of 8 code blocks and a slot frame structure of 2 code blocks.

According to different sub-slot sizes, the size of a sub-slot in a frame and the number of frames in a multiframe are changed, thereby implementing service transmission with different client granularities with no change in the frame structure.

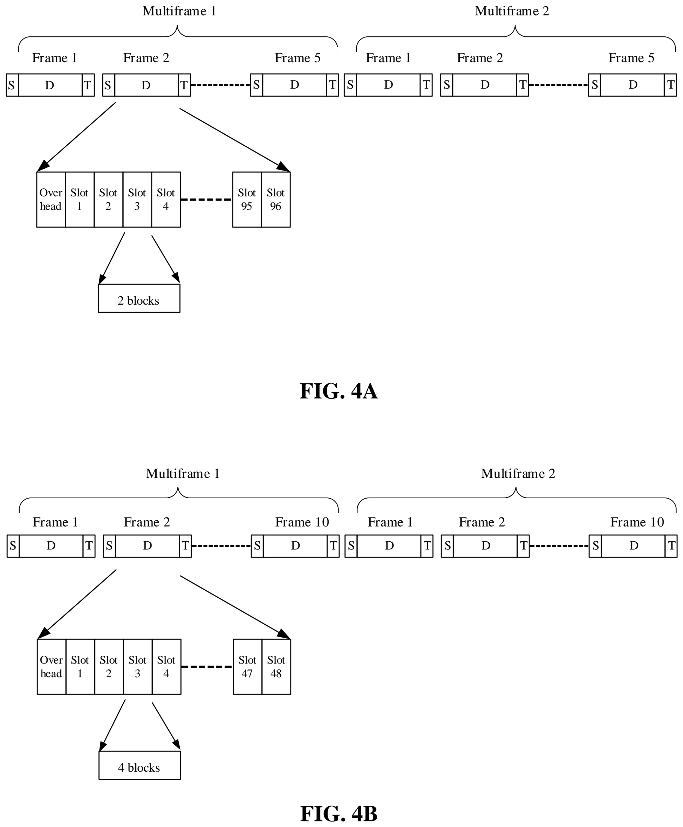

In specific applications, bearer frame structures in the network may be in several fixed sizes. For the requirements of a bearing scenario adapting to an fg-BU frame, the structure of a bearer frame is defined to consist of an S code block, 195 D code blocks, and a T code block (correspondingly, 1 start code block, 1 end code block, and 195 data code blocks are provided). In the structure of the bearer frame, x * y = 192 (correspondingly, the slot size is x code blocks, the number of slots in the bearer frame is y, the product of x and y is 192, and x and y are each a positive integer). When the bearer frame is divided into y = 24 slots, each slot bears x = 8 client code blocks. z = 20 frames form a multiframe. The total number of slots in one multiframe is 480 (y * z = 480). The total number of client code blocks borne in the frame is 8 * 24 = 192. The product of x and y is 192. The frame bears a total of 192 client code blocks. The product of y and z is 480. 480 client slots are borne in the multiframe. For the same bearer frame, in the case of 2 client code blocks, the slot size parameter x in the bearer frame is 2, and each slot bears two client code blocks. After x is determined, it is deduced that y is 96 (when the product of x and y is 192). After y is determined, it is further deduced that z is 5 (when the product of y and z is 480). In this case, each slot in the same frame structure bears 2 client code blocks. 96 slots are set in each frame. 5 frames form one multiframe including a total of 480 slots. FIG. 4A is a diagram illustrating the structure of a multiframe in which each slot bears 2 client code blocks. FIG. 4B is a diagram illustrating the structure of a multiframe in which each slot bears 4 client code blocks. FIG. 4A illustrates two multiframes, that is, multiframe 1 and multiframe 2. Each multiframe includes 5 bearer frames. The slot size of each bearer frame is 2 code blocks. The number of slots is 96. Similarly, in the case of 4 client code blocks, x is 4. Then it is deduced that y is 48 (when the product of x and y is 192). Further it is deduced that z is 10 (when the product of y and z is 480). In this case, each slot in the frame structure bears 4 client code blocks. 48 slots are set in each frame. 10 frames form one multiframe including a total of 480 slots, as shown in FIG. 4B.

For bearer frame structures, except for the preceding examples, a bearer frame structure is determined as follows: the bearer frame consists of an S code block, D code blocks and a T code block; the bearer region of the D code blocks bearing a client service has only 64 bits when the overhead portion in the bearer frame structure has 7 bytes, the overhead bytes is placed in the first D code block, the number of slots is 480, and the length of a client code block is 66 bits, considering that a client code block has 66 bits; when a (a is a positive integer) D code blocks (the T code block is equivalent to a D code block when the T code block bears client content) bear b client code blocks, the length of the bearer frame needs to satisfy several principles. In principle one, the number of D code blocks in the selected bearer frame is a, and b client code blocks may be borne in the a D code blocks. 64 bearer bits exist in one D code block. The length of a client code block is 66 bits. Appropriate a and b parameters satisfying that a * 64 = b * 66 (a and b are each a positive integer) are selected so that the b client code blocks can be borne in the a D code blocks. The formula is reduced as that a * 32 = b * 33. a and b are searched for. To satisfy the formula, a and b must be a multiple of 33 and a multiple of 32 respectively. Therefore, the further equivalent alternative formula of the preceding formula is that (n * 33) * 32 = (n * 32) * 33. That is, a = n * 33, and b = n * 32. n is a positive integer. In principle two, if each slot has 2 code blocks, b/2 slots exist at b code block positions in the frame. When the total number of slots is 480, the b/2 slots in each frame must be a factor of 480. In principle three, in the case of a maximum of 480 slots in each frame, if each frame has b/2 slots, then b/2 is not greater than 480. That is, n * 16 is not greater than 480. In principle four, the efficiency of the bearer frame requires that the number of D code blocks is greater than 180, and a = (n * 33) which is greater than 180. In combination of principle one and principle two, it is deduced that b/2 = (n * 32)/2 = n * 16 must be a factor of 480. n can be selected only among 1, 2, 3, 5, 6, 10, 15, and 30. It is deduced through principle three that n is not greater than 30. It is deduced through principle four that n is greater than 5. In this case, n can be selected only among 6, 10, 15, and 30. The bearer frame may have the following structures: the first bearer frame structure (n = 6) is that 1 S code block + 198 D code blocks + 1 T code block; the second bearer frame structure (n = 10) is that 1 S code block + 330 D code blocks + 1 T code block; the third bearer frame structure (n = 15) is that 1 S code block + 495 D code blocks + 1 T code block; and the fourth bearer frame structure (n = 30) is that 1 S code block + 990 D code blocks + 1 T code block.

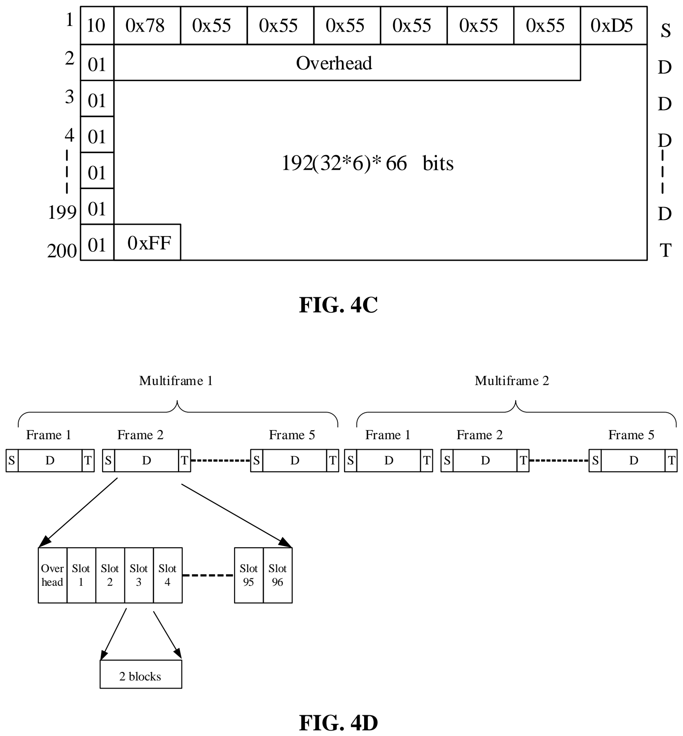

FIG. 4C illustrates the structure of a bearer frame according to an embodiment of the present application. The first bearer frame structure is shown in FIG. 4C. 7 overhead bytes are provided and are borne in the first D code block. The last byte in the first D code block, 8 bytes in all subsequent D code blocks, and the last 7 bytes of the last T code block form the bearer region of the bearer frame, which has a total of 192 * 66 bits and can bear 192 client code blocks (each client code block has a length of 66 bits). The bearer region may be divided into different slot formats. For example, the bearer region may be divided into 96 slots, where 2 code blocks are set in each slot; the bearer region may be divided into 48 slots, where 4 code blocks are set in each slot; or the bearer region may be divided into 24 slots, where 8 code blocks are set in each slot.

For the first bearer frame structure, when 2 client code blocks are provided, the client service is borne by 2 code blocks per slot and 96 slots. 5 bearer frames form a multiframe and bear the client service structure. FIG. 4D is a diagram illustrating the structure of a multiframe in which each slot bears 2 client code blocks. As shown in FIG. 4D, the slot size of a bearer frame is 2 code blocks. One bearer frame has 96 slots.

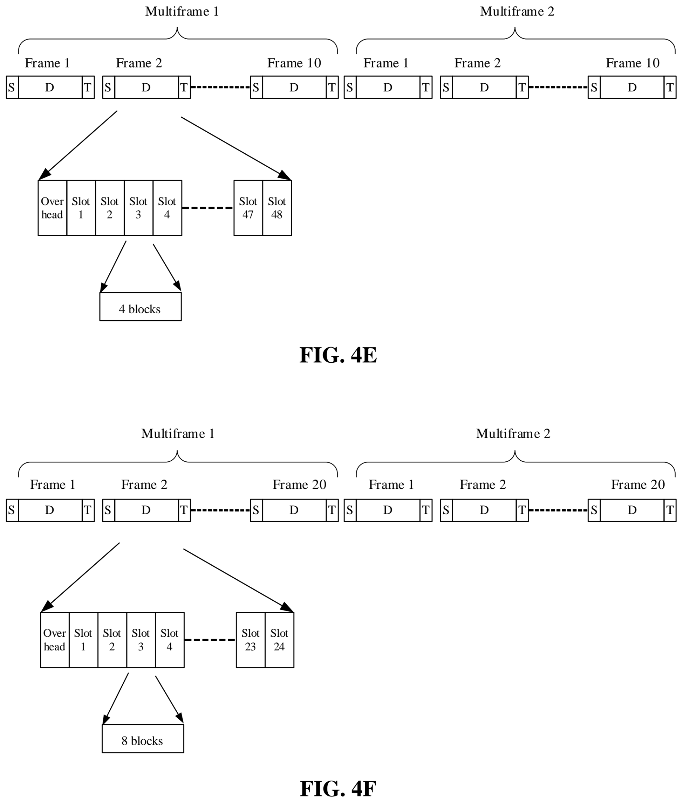

FIG. 4E is a diagram illustrating the structure of a multiframe in which each slot bears 4 client code blocks. FIG. 4F is a diagram illustrating the structure of a multiframe in which each slot bears 8 client code blocks. When 4 client code blocks are provided, the client service is borne by 4 code blocks per slot and 48 slots. 10 bearer frames form a multiframe. The client service structure borne in the bearer frames is shown in FIG. 4E. When 8 client code blocks are provided, the client service is borne by 8 code blocks per slot and 24 slots. 20 bearer frames form a multiframe. The client service structure borne in the bearer frames is shown in FIG. 4F.

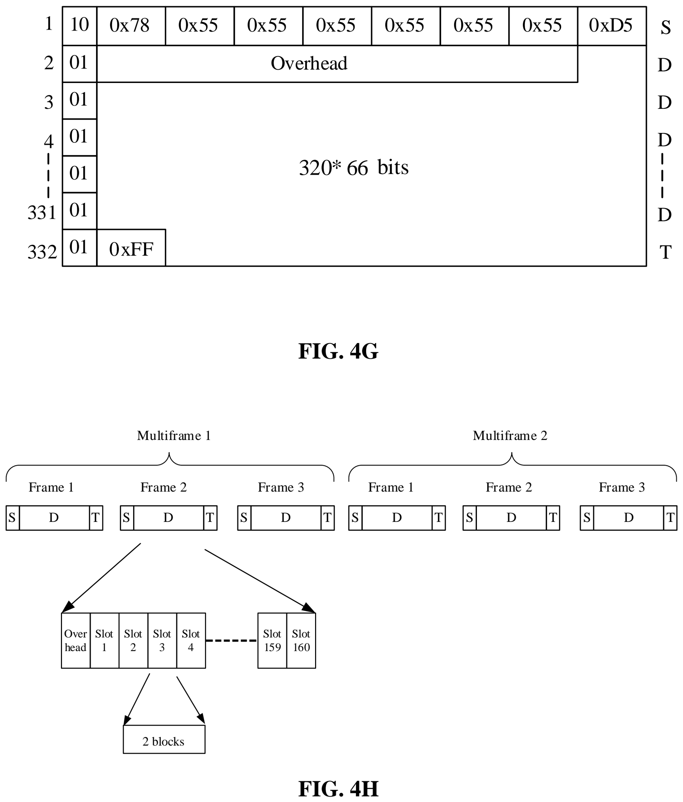

FIG. 4G is a diagram illustrating the structure of a bearer frame according to an embodiment of the present application. The second bearer frame structure is shown in FIG. 4G. 7 overhead bytes are provided and are borne in the first D code block. The last byte in the first D code block, 8 bytes in all subsequent D code blocks, and the last 7 bytes of the last T code block form the bearer region of the bearer frame, which has a total of 320 * 66 bits and can bear 320 client code blocks (each client code block has a length of 66 bits). The bearer region may be divided into different slot formats. For example, the bearer region may be divided into 320 slots, where 1 code block is set in each slot; the bearer region may be divided into 160 slots, where 2 code blocks are set in each slot; the bearer region may be divided into 80 slots, where 4 code blocks are set in each slot; or the bearer region may be divided into 40 slots, where 8 code blocks are set in each slot.

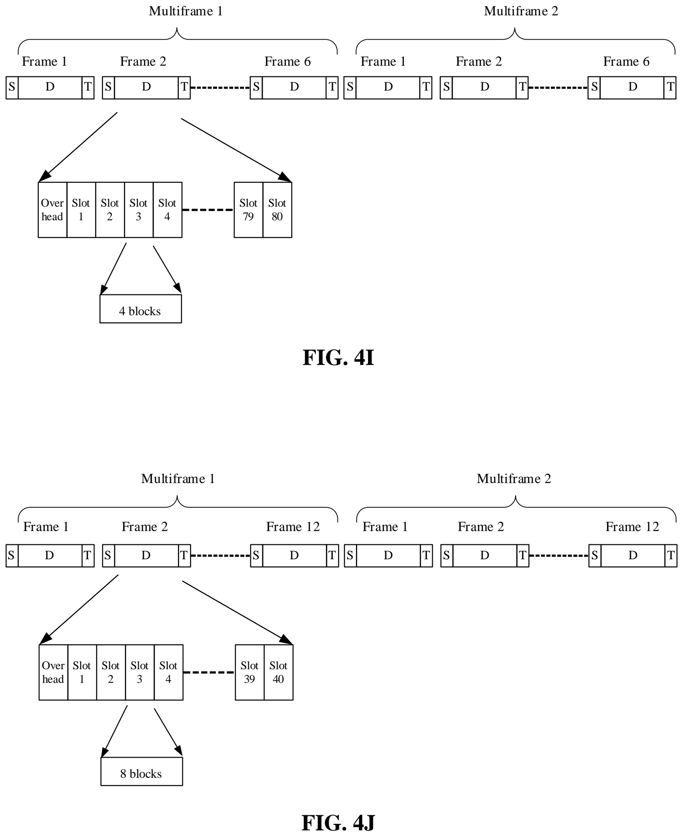

FIG. 4H is a diagram illustrating the structure of a multiframe in which each slot bears 2 client code blocks. For the second bearer frame structure, when 2 client code blocks are provided, the client service is borne by 2 code blocks per slot and 160 slots. 3 bearer frames form a multiframe. The client service structure borne in the bearer frames is shown in FIG. 4H. When 4 client code blocks are provided, the client service is borne by 4 code blocks per slot and 80 slots. 6 bearer frames form a multiframe. The client service structure borne in the bearer frames is shown in FIG. 4I. When 8 client code blocks are provided, the client service is borne by 8 code blocks per slot and 40 slots. 12 bearer frames form a multiframe. The client service structure borne in the bearer frames is shown in FIG. 4J.

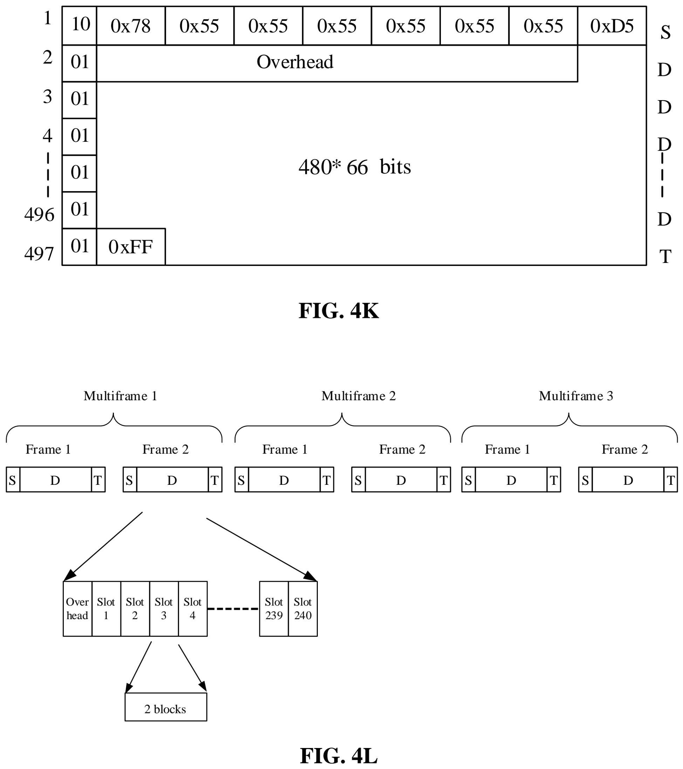

FIG. 4K is a diagram illustrating the structure of a bearer frame according to an embodiment of the present application. The third bearer frame structure is shown in FIG. 4K. 7 overhead bytes are provided and are borne in the first D code block. The last byte in the first D code block, 8 bytes in all subsequent D code blocks, and the last 7 bytes of the last T code block form the bearer region of the bearer frame, which has a total of 480 * 66 bits and can bear 480 client code blocks (each client code block has a length of 66 bits). The bearer region may be divided into different slot formats. For example, the bearer region may be divided into 480 slots, where 1 code block is set in each slot; the bearer region may be divided into 240 slots, where 2 code blocks are set in each slot; the bearer region may be divided into 120 slots, where 4 code blocks are set in each slot; or the bearer region may be divided into 60 slots, where 8 code blocks are set in each slot.

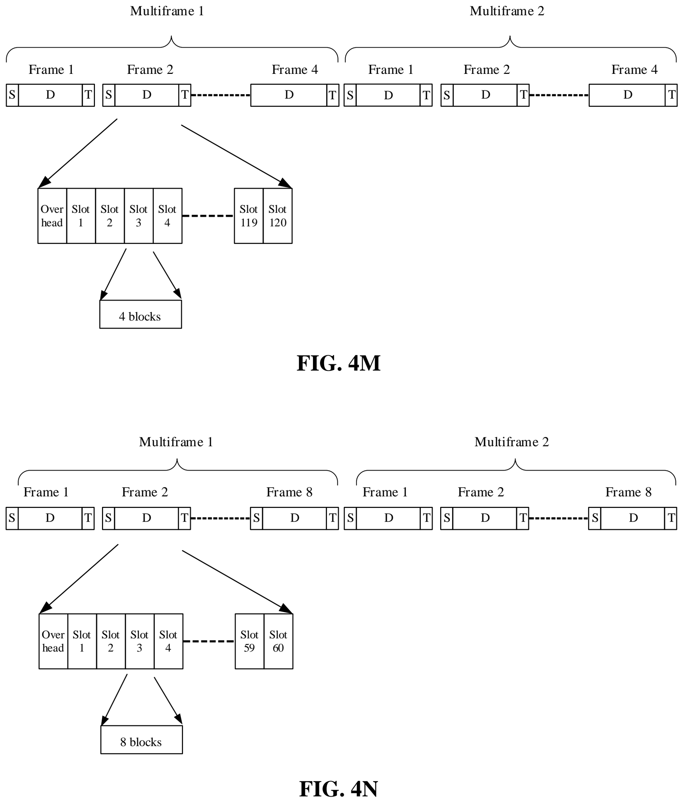

FIG. 4L is a diagram illustrating the structure of a multiframe in which each slot bears 2 client code blocks. FIG. 4M is a diagram illustrating the structure of a multiframe in which each slot bears 4 client code blocks. FIG. 4N is a diagram illustrating the structure of a multiframe in which each slot bears 8 client code blocks. For the third bearer frame structure, when 2 client code blocks are provided, the client service is borne by 2 code blocks per slot and 240 slots. 2 bearer frames form a multiframe. The client service structure borne in the bearer frames is shown in FIG. 4L. When 4 client code blocks are provided, the client service is borne by 4 code blocks per slot and 120 slots. 4 bearer frames form a multiframe. The client service structure borne in the bearer frames is shown in FIG. 4M. When 8 client code blocks are provided, the client service is borne by 8 code blocks per slot and 60 slots. 8 bearer frames form a multiframe. The client service structure borne in the bearer frames is shown in FIG. 4N.

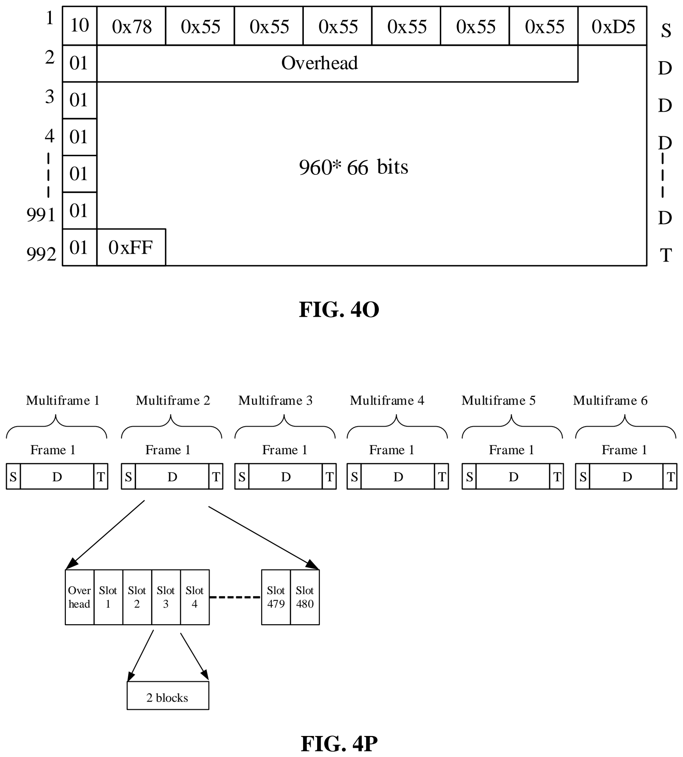

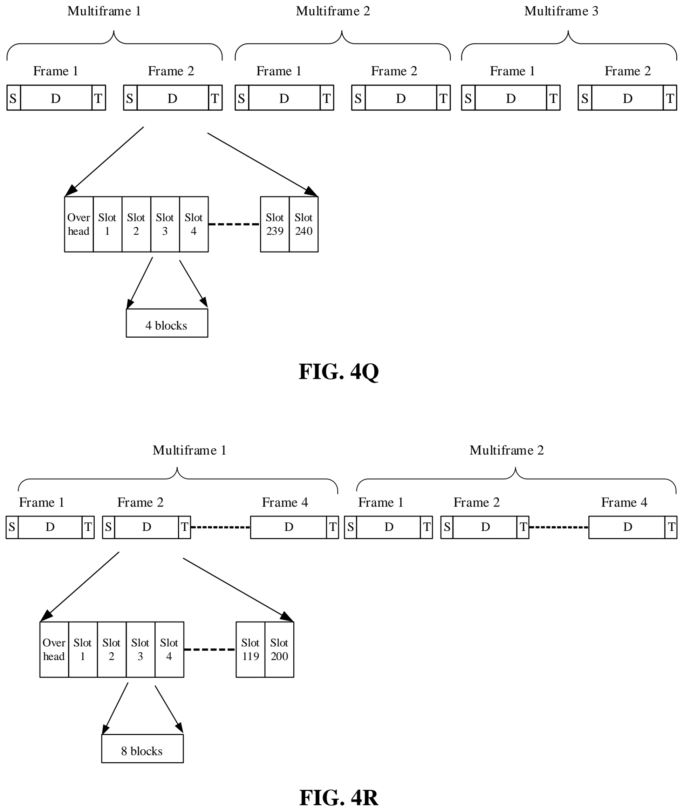

FIG. 4O is a diagram illustrating the structure of a bearer frame according to an embodiment of the present application. FIG. 4P is a diagram illustrating the structure of a multiframe in which each slot bears 2 client code blocks. FIG. 4Q is a diagram illustrating the structure of a multiframe in which each slot bears 4 client code blocks. FIG. 4R is a diagram illustrating the structure of a multiframe in which each slot bears 8 client code blocks. The fourth bearer frame structure is shown in FIG. 4O. 7 overhead bytes are provided and are borne in the first D code block. The last byte in the first D code block, 8 bytes in all subsequent D code blocks, and the last 7 bytes of the last T code block form the bearer region of the bearer frame, which has a total of 960 * 66 bits and can bear 960 client code blocks (each client code block has a length of 66 bits). The bearer region may be divided into different slot formats. For example, the bearer region may be divided into 480 slots, where 2 code blocks are set in each slot; the bearer region may be divided into 240 slots, where 4 code blocks are set in each slot; or the bearer region may be divided into 120 slots, where 8 code blocks are set in each slot.

For the fourth bearer frame structure, when 2 client code blocks are provided, the client service is borne by 2 code blocks per slot and 480 slots. 1 bearer frame forms a multiframe. The client service structure borne in the bearer frame is shown in FIG. 4P. When 4 client code blocks are provided, the client service is borne by 4 code blocks per slot and 240 slots. 2 bearer frames form a multiframe. The client service structure borne in the bearer frames is shown in FIG. 4Q. When 8 client code blocks are provided, the client service is borne by 8 code blocks per slot and 120 slots. 4 bearer frames form a multiframe. The client service structure borne in the bearer frames is shown in FIG. 4R.

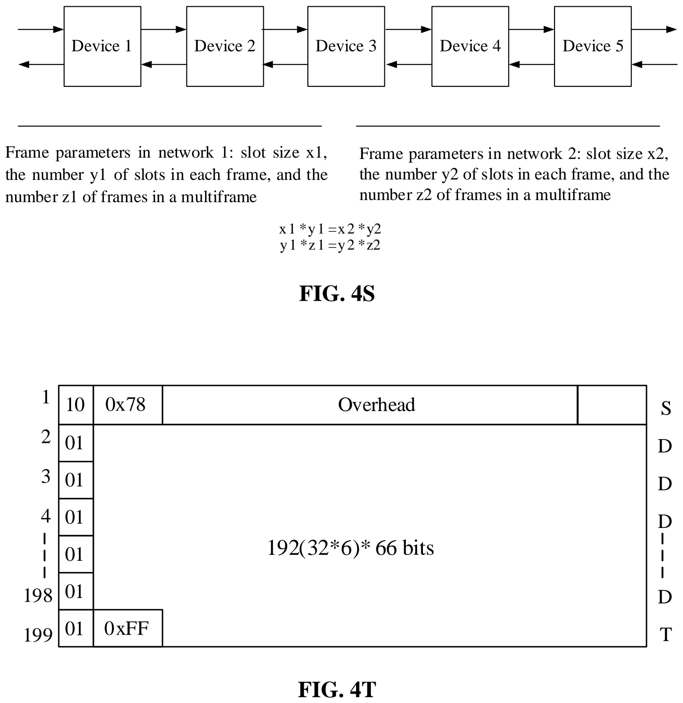

FIG. 4S is a diagram illustrating the scenario of penetrating different network systems according to an embodiment of the present application. In the preceding application examples, the same client service needs to penetrate two different network systems. The same frame structure is used in the two network systems, but one network system has different slot sizes. As shown in FIG. 4S, the same client service is borne and transmitted in network one and is borne and transmitted in network two through device 3. The client service is borne in network one according to frame structure parameters in network one (x1, y1, and z1, for example, x1 = 2, y1 = 96, and z1 = 5). After passing through device 3, the client service is borne in network two according to frame structure parameters in network two (x2, y2, and z2, for example, x2 = 8, y2 = 24, and z2 = 20). Each slot in network one has 2 code blocks. Each slot in network two has 8 code blocks. For the process of transmitting the client service from network one to network two, a slot in a frame has 2 code blocks when the client service is sent from device 2 to device 3. Device 3 receives the client service borne in two code blocks per slot. For the same client service, device 3 needs to continuously receive code blocks in 4 slots of the client. The code blocks in the 4 slots are formed into 8 code blocks and then are placed in one slot position in the frame structure of network two to be sent from device 3 to device 4. Each slot in network two has 8 code blocks. The client service of 8 code blocks in one slot in the frame structure in network two derives from the client code blocks in 4 slots in network one. Device 3 completes the conversion from 4 slots in network one (where each slot consists of 2 code blocks) to 1 slot in network two (where each slot consists of 8 code blocks). Similarly, when the client service is transmitted from network two to network one, each slot in network two has 8 code blocks, and each slot in network one has 2 code blocks. For the process of transmitting the client service from network two to network one, a slot in a frame has 8 code blocks when the client service is sent from device 4 to device 3. Device 3 receives the client service of 8 code blocks in 1 slot. For the same client service, device 3 needs to place the received 8 code blocks in 4 slot positions of the client in network one to be sent from device 3 to device 2. The 4 slots in network one complete the bearing of the code blocks of 1 slot in network two. Device 3 completes the conversion from 1 slot in network two (where each slot consists of 8 code blocks) to 4 slots in network one (where each slot consists of 4 code blocks).

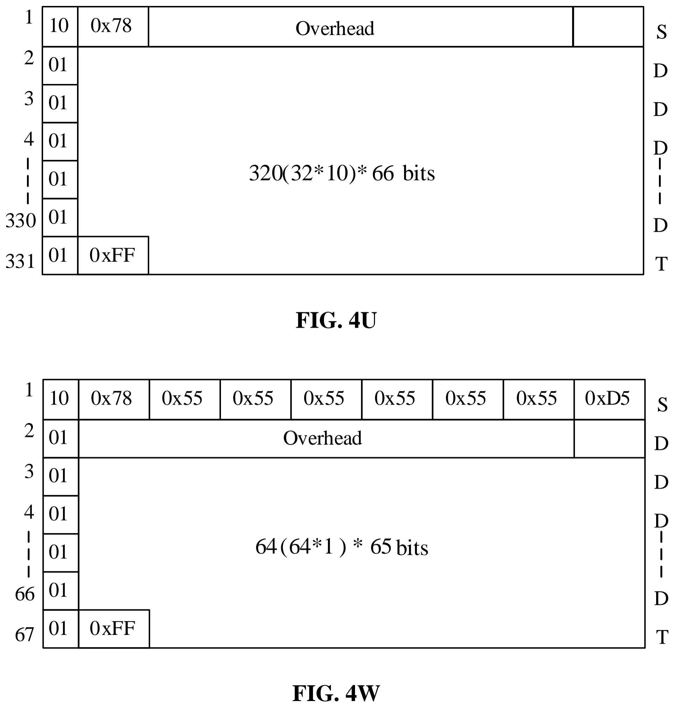

The preceding first to fourth bearer frame structures are examples in which 7 overhead bytes are provided and are borne in the D code blocks, with the length of a code block being 66 bits. In specific applications, the overhead byte length may be another byte length. The overhead bytes may be at any positions in the frame. 6 overhead bytes are provided in a frame structure and are borne in the S code block. In this case, the first frame structure is changed from FIG. 4C to FIG. 4T. FIG. 4T also belongs to the category of the first frame structure. Similarly, the second frame structure is changed from FIG. 4G to FIG. 4U. FIG. 4U also belongs to the category of the second frame structure. The third frame structure and the fourth frame structure also have similar applications. Whether the overhead bytes are placed on the D code blocks or the S code block, the number of slots and the slot structure in the frame are not changed, resulting in the belonging to the same type of frame structure.

In the preceding examples, a client code block is a 66-bit code block defined by Ethernet. In an application, the client code block can be compressed and encoded or transcoded first. The slot length of a bearer frame may be determined according to the length of a code block after being compressed and encoded or transcoded. For example, the length of a client code block is compressed from 66 bits to 65 bits. Then a bearer frame structure is designed based on the code block length of 65 bits. When the length of a client code block is compressed from 66 bits to 65 bits, the length of a client code block becomes shorter, making the corresponding client service bandwidth smaller and reducing the bearing efficiency requirements for the bearer frame. The number of D code blocks in the bearer frame needs to be greater than 64 to meet the bandwidth requirements. Since the client code block is 65 bits, the bearer region of a D code block bearing the client service is only 64 bits. When a (a is a positive integer) D code blocks (when the T code block bears the client content, the T code block is equivalent to a D code block) bear b client code blocks, the length of the bearer frame needs to meet several principles. In principle five, the number of D code blocks in the selected bearer frame is a, and b client code blocks may be borne in the a D code blocks. 64 bearer bits exist in one D code block. The length of a client code block is 65 bits. Appropriate a and b parameters satisfying that a * 64 = b * 65 (a and b are each a positive integer) are selected so that the b client code blocks can be borne in the a D code blocks. a and b are searched for. To satisfy the formula, a and b must be a multiple of 65 and a multiple of 64 respectively. Therefore, the further equivalent alternative formula of the preceding formula is that (n * 65) * 64 = (n * 64) * 65. That is, a = n * 65, and b = n * 64. n is a positive integer (that is, the first value is the length of a code block in the target data, and the second value is the length of a code block in the bearer region). In principle six, if each slot has 2 code blocks, b/2 slots exist at b code block positions in the frame. When the total number of slots is 480, the b/2 slots in each frame must be a factor of 480. In principle seven, in the case of a maximum of 480 slots in each frame, if each frame has b/2 slots, then b/2 is not greater than 480. That is, n * 64 is not greater than 480. In principle eight, the efficiency of the bearer frame requires that the number of D code blocks is greater than 64, and a = (n * 65) which is greater than 64. In combination of principle five and principle six, it is deduced that b/2 = (n * 64)/2 = n * 32 must be a factor of 480. n can be selected only among 1, 3, 5, 6, and 15. It is deduced through principle seven that n is not greater than 7.5. It is deduced through principle eight that n is greater than or equal to 1. In this case, n can be selected only among 1, 3, and 5. The bearer frame may have the following structures: the fifth bearer frame structure (n = 1) is that 1 S code block + 65 D code blocks + 1 T code block; the sixth bearer frame structure (n = 3) is that 1 S code block + 195 D code blocks + 1 T code block; and the seventh bearer frame structure (n = 5) is that 1 S code block + 325 D code blocks + 1 T code block.

The fifth bearer frame structure is shown in FIG. 4W (n = 1). 7 overhead bytes are provided and are borne in the first D code block. The last byte in the first D code block, 8 bytes in all subsequent D code blocks, and the last 7 bytes of the last T code block form the bearer region of the bearer frame, which has a total of 64 * 65 bits and can bear 64 client code blocks (each client code block has a length of 65 bits). The bearer region may be divided into different slot formats. For example, the bearer region may be divided into 64 slots, where 1 code block is set in each slot; the bearer region may be divided into 32 slots, where 2 code blocks are set in each slot; the bearer region may be divided into 16 slots, where 4 code blocks are set in each slot; or the bearer region may be divided into 8 slots, where 8 code blocks are set in each slot.

For the fifth bearer frame structure, when 2 client code blocks are provided, the client service is borne by 2 code blocks per slot and 32 slots. 15 bearer frames form a multiframe. FIG. 4W is a diagram illustrating the structure of a bearer frame bearing a client service according to an embodiment of the present application. The client service structure borne in the bearer frame is shown in FIG. 4W. When 4 client code blocks are provided, the client service is borne by 4 code blocks per slot and 16 slots. 30 bearer frames form a multiframe. The client service structure borne in the bearer frames is shown in FIG. 4Q. When 8 client code blocks are provided, the client service is borne by 8 code blocks per slot and 8 slots. 60 bearer frames form a multiframe.

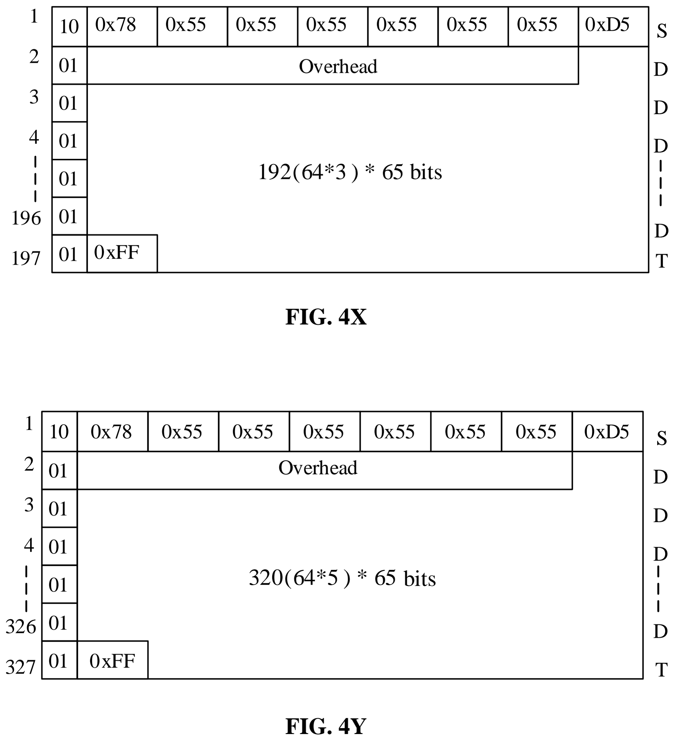

FIG. 4X is a diagram illustrating the structure of another bearer frame bearing a client service according to an embodiment of the present application. The sixth bearer frame structure is shown in FIG. 4X (n = 3). 7 overhead bytes are provided and are borne in the first D code block. The last byte in the first D code block, 8 bytes in all subsequent D code blocks, and the last 7 bytes of the last T code block form the bearer region of the bearer frame, which has a total of 192 * 65 bits and can bear 192 client code blocks (each client code block has a length of 65 bits). The bearer region may be divided into different slot formats. For example, the bearer region may be divided into 192 slots, where 1 code block is in each slot; the bearer region may be divided into 96 slots, where 2 code blocks are set in each slot; the bearer region may be divided into 48 slots, where 4 code blocks are set in each slot; or the bearer region may be divided into 24 slots, where 8 code blocks are set in each slot.

For the second bearer frame structure, when 2 client code blocks are provided, the client service is borne by 2 code blocks per slot and 96 slots. 5 bearer frames form a multiframe. When 4 client code blocks are provided, the client service is borne by 4 code blocks per slot and 48 slots. 10 bearer frames form a multiframe. When 8 client code blocks are provided, the client service is borne by 8 code blocks per slot and 24 slots. 20 bearer frames form a multiframe.

FIG. 4Y is a diagram illustrating the structure of another bearer frame bearing a client service according to an embodiment of the present application. The third bearer frame structure is shown in FIG. 4Y (n = 5). 7 overhead bytes are provided and are borne in the first D code block. The last byte in the first D code block, 8 bytes in all subsequent D code blocks, and the last 7 bytes of the last T code block form the bearer region of the bearer frame, which has a total of 320 * 66 bits and can bear 320 client code blocks (each client code block has a length of 65 bits). The bearer region may be divided into different slot formats. For example, the bearer region may be divided into 320 slots, where 1 code block is set in each slot; the bearer region may be divided into 160 slots, where 2 code blocks are set in each slot; the bearer region may be divided into 80 slots, where 4 code blocks are set in each slot; or the bearer region may be divided into 40 slots, where 8 code blocks are set in each slot.

For the third bearer frame structure, when 2 client code blocks are provided, the client service is borne by 2 code blocks per slot and 160 slots. 3 bearer frames form a multiframe. When 4 client code blocks are provided, the client service is borne by 4 code blocks per slot and 80 slots. 6 bearer frames form a multiframe. When 8 client code blocks are provided, the client service is borne by 8 code blocks per slot and 40 slots. 12 bearer frames form a multiframe.

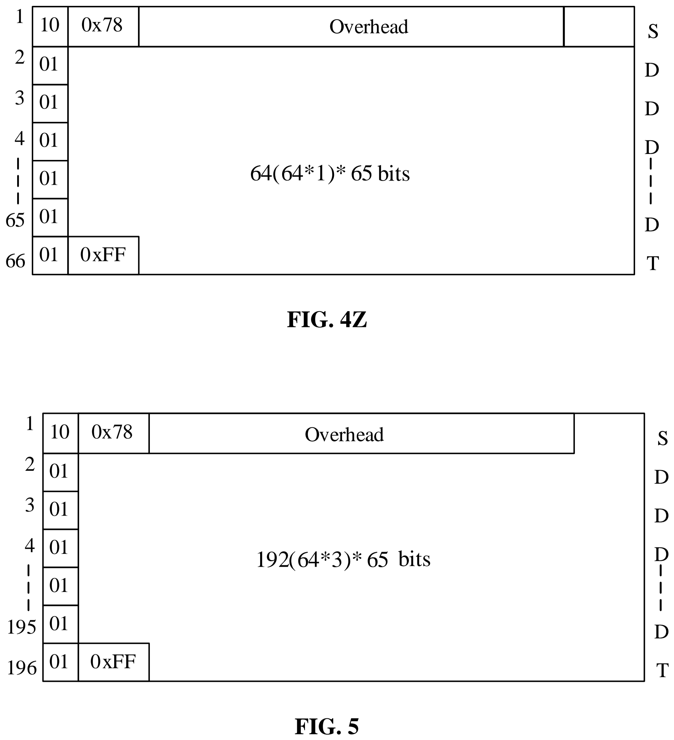

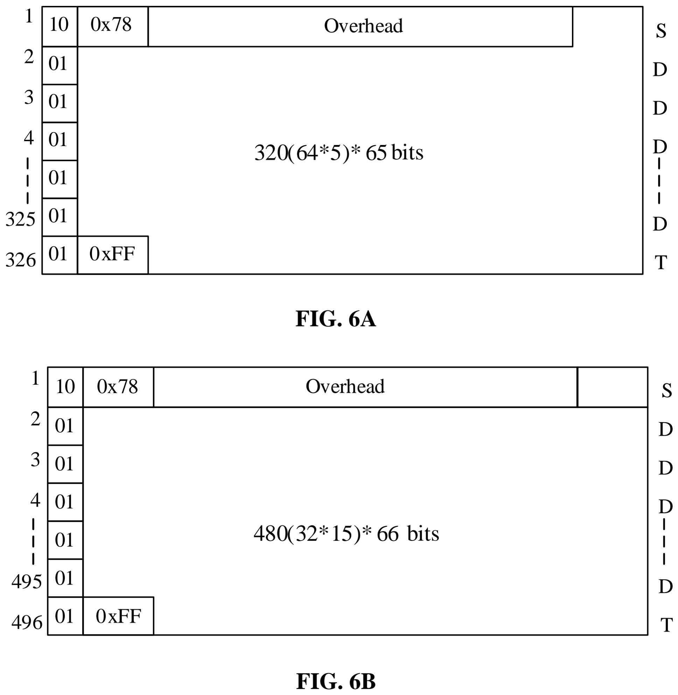

FIG. 4Z is a diagram illustrating the structure of another bearer frame bearing a client service according to an embodiment of the present application. FIG. 5 is a diagram illustrating the structure of another bearer frame bearing a client service according to an embodiment of the present application. FIG. 6A is a diagram illustrating the structure of another bearer frame bearing a client service according to an embodiment of the present application. In the preceding fifth, sixth, and seventh bearer frame structures, 7 overhead bytes are provided and are borne in the first D code block. In specific applications, the overhead byte length may be another byte length. The overhead bytes may be at any positions in the frame. For example, 6 overhead bytes are provided in a frame structure and are borne in the S code block. In this case, the fifth frame structure is changed from FIG. 4W to FIG. 4Z. FIG. 4Z also belongs to the category of the fifth frame structure. Similarly, the sixth frame structure is changed from FIG. 4X to FIG. 5. FIG. 5 also belongs to the category of the sixth frame structure. The seventh frame structure is changed from FIG. 4Y to FIG. 6A. FIG. 6A also belongs to the category of the seventh frame structure. Whether the overhead bytes are placed on the D code blocks or the S code block, the number of slots and the slot structure in the frame are not changed, resulting in the belonging to the same type of frame structure.

FIG. 6B illustrates the structure of another bearer frame according to an embodiment of the present application. In the case where the start code block bears overhead, the bearer frame includes 1 start code block, 494 data code blocks, and 1 end code block.

A client code block is a 66-bit code block defined by Ethernet. Apart from being compressed to a length of 65 bits to design the bearer frame, the client code block may also be transcoded to design the bearer frame. For example, a 66-bit code block is transcoded for a 257-bit code block (four 66-bit code blocks are transcoded into a 257-bit code block), and the slot length of the bearer frame is designed according to the length of the 257-bit code block. These are all within the scope of the present application.

The client service is mapped into the bearer frame and sent out through the bearer frame. When the bearer frame is forwarded by an intermediate device on the network, the transmission speed is deviated due to the clock deviation between different devices. In order to adjust the speed of the intermediate device, when the device sends the bearer frame, an appropriate idle code block (referred to as I code block for short) needs to be inserted between bearer frames. When the intermediate device needs to adjust the speed, the frequency of the speed is implemented by adding or deleting an appropriate amount of idle code blocks. This requires a certain number of idle code blocks to be inserted between bearer frames when the source device sends the bearer frame. In order to facilitate the restoration of the clock frequency of the client service, a sink device needs to know the original distribution status of an idle code block and the situation of how the intermediate device adds or deletes the idle code block. This requires that the idle code block inserted between bearer frames needs to follow a certain distribution rule when the source device sends the bearer frame. In this case, no matter how the intermediate device adds or deletes the idle code block on the network, the sink device can know the status of the idle code block inserted by the source device. When the distribution status of an actually received idle code block is inconsistent with the distribution status of the inserted idle code block when the source device sends the bearer frame, it indicates that the intermediate device has added or deleted the idle code block, as well as the details of these additions or deletions. The sink device can restore the original distribution status of the idle code block, thereby facilitating the restoration of the clock of the client service. The rule of the inserted idle code block when the source device sends the bearer frame may include one of the following manners: 1. one, two, or three idle code blocks of the same number are inserted between adjacent bearer frames (that is, a first fixed number of idle code blocks are inserted between adjacent bearing frames); 2. a fixed number of idle code blocks are inserted periodically after every fixed number of bearer frames; for example, n idle code blocks are inserted periodically after m bearer frames, and n and m are each a positive integer (that is, a second fixed number of idle code blocks are inserted periodically after every fixed number of bearer frames); or 3. a fixed number of idle code blocks are inserted in one multiframe period (that is, a third fixed number of idle code blocks are inserted in one multiframe period). For example, a multiframe consists of m frames. A total of n idle code blocks are inserted into the m frames in the multiframe. The n idle code blocks are distributed in the m bearer frames in the multiframe according to a certain rule. For example, one idle code block is inserted between frame 1 and frame 2, 0 idle code block is inserted between frame 2 and frame 3, 0 idle code block is inserted between frame 3 and frame 4, and 1 idle code block is inserted between frame 4 and frame 5.... Similarly, a corresponding number of idle code blocks are inserted between other frames according to the set rule.

The source device maps the client service to the bearer frame and sends out the client service after inserting an appropriate amount of idle code blocks between bearer frames according to the certain rule (that is, the source device maps the target data to the bearer frame, inserts the idle code block between bearer frames according to the set rule, and transmits the bearer frame). After receiving the bearer frame, the sink device stores the original idle distribution status according to the rule of inserting the idle code block by the source device, extracts the client service, and restores the client service clock information (that is, restores the idle code block between bearer frames to the original idle distribution status according to the set rule, extracts the target data from the bearer frame, and restores the clock information of the target data based on the idle code blocks and the local clock).

In the present application, a corresponding bearer slot size is selected for implementing bearing according to the size of a client code block, achieving the best bearing effect.

The preceding examples are several specific embodiments of the present application and have different forms and content in implementation. The embodiments may be combined arbitrarily; alternatively, technical features included in each embodiment may be omitted, replaced, or added. These changes are all within the scope of the present application.

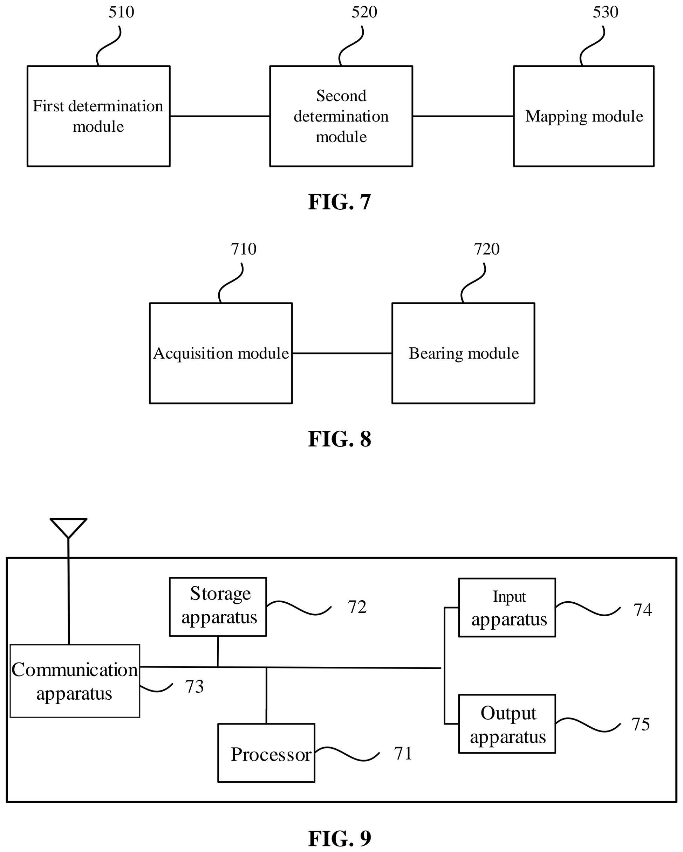

In an example embodiment, the present application provides a transmission apparatus. The transmission apparatus may be integrated on a communication node. FIG. 7 is a diagram illustrating the structure of a transmission apparatus according to an embodiment of the present application. The transmission apparatus includes a first determination module 510, a second determination module 520, and a mapping module 530.

The first determination module 510 is configured to determine the frame structure of a bearer frame. The bearer frame includes a plurality of types of code blocks. The bearer frame includes a plurality of slots. The slots support a plurality of slot sizes. A slot size is used in the determined frame structure.

The second determination module 520 is configured to determine the frame structure of the multiframe including the bearer frame.

The mapping module 530 is configured to map target data to the bearer frame in the multiframe for transmission.

The transmission apparatus provided in this embodiment is used for implementing the transmission method in the embodiment shown in FIG. 2. The implementation principle and technical effect of the transmission apparatus provided in this embodiment are similar to the method of the embodiment shown in FIG. 2 and are not repeated here.

Based on the preceding embodiment, variant embodiments of the preceding embodiment are provided. It is to be noted that for ease of description, only differences from the preceding embodiment are described in the variant embodiments.

In an embodiment, the product of the slot size in the bearer frame and the number of slots in the bearer frame is fixed, and the product of the number of slots in the bearer frame and the number of bearer frames in the multiframe is fixed.

In an embodiment, the code blocks include a start code block, data code blocks, and an end code block. The bearer frame includes an overhead field. The overhead field is borne in one of the data code blocks, the start code block, or the end code block. The overhead field indicates the number of bearer frames in the multiframe and the position of the bearer frame in the multiframe.

In an embodiment, the overhead field is located in the first data code block among the data code blocks. The bearer region of the bearer frame includes data code blocks other than the first data code block, the region in the first data code block other than the region where the overhead field is mapped, and the region in the end code block other than the region where an end block is located. The target data is borne in the bearer region.

In an embodiment, the bearer region of the bearer frame includes the data code blocks, the region in the start code block other than the region where the overhead field is located, and the region in the end code block other than the region where the end block is located.

In an embodiment, the bearer frame meets one or more of the conditions below.

The number of code blocks included in the bearer region of the bearer frame is i times the first value; the number of code blocks in the target data is i times the second value; the first value is determined based on the length of a code block in the target data; and the second value is determined based on the length of a code block in the bearer region.

The number of slots corresponding to the target data is a factor of the total number of slots in the multiframe.

In an embodiment, the first value is the length of a code block in the target data, and the second value is the length of a code block in the bearer region.

Alternatively, the first value is the length of the target data divided by a common divisor. The second value is the length of a code block in the bearer region divided by the common divisor. The common divisor is a common divisor of the length of the target data and the length of a code block in the bearer region.

In an embodiment, 1 start code block, 1 end code block, and 198 data code blocks are provided. The slot size is x code blocks. The number of slots in the bearer frame is y. The product of x and y is 192. x and y are each a positive integer.

In an embodiment, 1 start code block, 1 end code block, and 330 data code blocks are provided. The slot size is x code blocks. The number of slots in the bearer frame is y. The product of x and y is 320. x and y are each a positive integer.

In an embodiment, 1 start code block, 1 end code block, and 495 data code blocks are provided. The slot size is x code blocks. The number of slots in the bearer frame is y. The product of x and y is 480. x and y are each a positive integer.

In an embodiment, 1 start code block, 1 end code block, and 990 data code blocks are provided. The slot size is x code blocks. The number of slots in the bearer frame is y. The product of x and y is 960. x and y are each a positive integer.

In an embodiment, 1 start code block, 1 end code block, and 195 data code blocks are provided. The slot size is x code blocks. The number of slots in the bearer frame is y. The product of x and y is 192. x and y are each a positive integer.

In an embodiment, 1 start code block, 1 end code block, and 65 data code blocks are provided. The slot size is x code blocks. The number of slots in the bearer frame is y. The product of x and y is 64. x and y are each a positive integer.

In an embodiment, 1 start code block, 1 end code block, and 195 data code blocks are provided. The slot size is x code blocks. The number of slots in the bearer frame is y. The product of x and y is 192. x and y are each a positive integer.

In an embodiment, 1 start code block, 1 end code block, and 325 data code blocks are provided. The slot size is x code blocks. The number of slots in the bearer frame is y. The product of x and y is 320. x and y are each a positive integer.

In an embodiment, the slot size includes one or more of 2 code blocks, 4 code blocks, or 8 code blocks.

In an embodiment, the length of a code block in the target data includes 66 bits, 65 bits, or 257 bits.

In an embodiment, the first determination module 510 is configured to perform the following.

The slot size used in the bearer frame is determined.

The number of slots in the bearer frame is determined.

In an embodiment, the second determination module 520 is configured to perform the following.

The number of bearer frames included in the multiframe is determined.

The transmission apparatus provided in this embodiment is configured to perform the transmission method of the embodiment shown in FIG. 2. The transmission apparatus provided in this embodiment has implementation principles and technical effects similar to the transmission method of the embodiment shown in FIG. 2, which are not repeated here.

In an embodiment, mapping the target data to the bearer frame in the multiframe for transmission includes the following.

The target data is mapped to the bearer frame.

An idle code block is inserted between bearer frames according to a set rule.

The bearer frame is transmitted.

In an embodiment, the set rule includes one of the following.

A first fixed number of idle code blocks are inserted between adjacent bearer frames.

A second fixed number of idle code blocks are inserted periodically after every fixed number of bearer frames.

A third fixed number of idle code blocks are inserted in one multiframe period.

In an example embodiment, the present application provides another transmission apparatus. The transmission apparatus may be integrated on a communication node. The transmission apparatus in this embodiment and the transmission apparatus shown in FIG. 7 may be located on the same communication node or different communication nodes. FIG. 8 is a diagram illustrating the structure of another transmission apparatus according to an embodiment of the present application. Referring to FIG. 8, the transmission apparatus includes an acquisition module 710 and a bearing module 720.

The acquisition module 710 is configured to acquire, according to a first slot size, target data borne in slots of a bearer frame according to a first slot size. The bearer frame includes a plurality of types of code blocks. The bearer frame includes a plurality of slots. The slots support a plurality of slot sizes.

The bearing module 720 is configured to bear target data in a multiframe for transmission according to a second slot size. The first slot size is not equal to the second slot size.

Based on the preceding embodiment, variant embodiments of the preceding embodiment are provided. It is to be noted that for ease of description, only differences from the preceding embodiment are described in the variant embodiments.

In one embodiment, the acquisition module 710 is specifically configured to perform the following.

The bearer frame bearing the target data is received.

An idle code block between bearer frames is restored to an original idle distribution state according to a set rule.

The target data is extracted from the bearer frame according to the first slot size.

The clock information of the target data is restored based on the idle code block and a local clock.

In an embodiment, the set rule includes one of the following.

A first fixed number of idle code blocks are inserted between adjacent bearer frames.

A second fixed number of idle code blocks are inserted periodically after every fixed number of bearer frames.

A third fixed number of idle code blocks are inserted in one multiframe period.

In an embodiment, the first slot size is smaller than the second slot size. The bearing module 720 is specifically configured to perform the following.

The target data acquired from j slots is spliced and borne in the multiframe for transmission. The slot size of the spliced target data is the second slot size. j is a ratio of the second slot size to the first slot size.

In an embodiment, the first slot size includes 2 or 4, and the second slot size includes 4 or 8.

In an embodiment, the first slot size is greater than the second slot size. The bearing module 720 is specifically configured to perform the following.

The target data in one slot is split into k pieces of target data in the second slot size. k is a ratio of the first slot size to the second slot size.

The split target data is borne in the multiframe for transmission.

In an embodiment, the first slot size includes 4 or 8, and the second slot size includes 2 or 4.

In an example embodiment, an embodiment of the present application further provides a communication node. FIG. 9 is a diagram illustrating the structure of a communication node according to an embodiment of the present application. As shown in FIG. 9, the communication node provided in the present application includes one or more processors 71 and a storage apparatus 72. One or more processors 71 are provided in the communication node. In FIG. 9, one processor 71 is used as an example. The storage apparatus 72 is configured to store one or more programs. The one or more programs are executed by the one or more processors 71 to cause the one or more processors 71 to perform the transmission method in the embodiments of the present application.

The communication node further includes a communication apparatus 73, an input apparatus 74, and an output apparatus 75.

The processor 71, the storage apparatus 72, the communication apparatus 73, the input apparatus 74 and the output apparatus 75 in the communication node may be connected via a bus or other means, with connection via the bus as an example in FIG. 9.

The input apparatus 74 may be configured to receive inputted digital or character information and generate key signal input related to user settings and function control of the communication node. The output apparatus 75 may include a display device such as a display screen.

The communication apparatus 73 may include a receiver and a sender. The communication apparatus 73 is configured to perform information transceiving communications under the control of the processor 71.

As a computer-readable storage medium, the storage apparatus 72 may be configured to store software programs, computer-executable programs, and modules such as program instructions/modules corresponding to the transmission method described in embodiments of the present application (for example, the request sending module 31, the receiving module 32, the first calculation module 33, the parameter sending module 34, and the second calculation module 37 in the transmission apparatus). The storage apparatus 72 may include a program storage region and a data storage region, where the program storage region may store an operating system and an application program required by at least one function while the data storage region may store data created depending on use of the communication node. Additionally, the storage apparatus 72 may include a high-speed random-access memory and may further include a nonvolatile memory, such as at least one magnetic disk memory, a flash memory, or another nonvolatile solid-state memory. In some examples, the storage device 72 may further include memories which are remotely disposed with respect to the processor 71. These remote memories may be connected to the communication node via a network. Examples of the network include, but are not limited to, the Internet, an intranet, a local area network, a mobile communication network, and a combination thereof.

An embodiment of the present application further provides a storage medium for storing a computer program which, when executed by a processor, causes the processor to perform the transmission method according to any embodiment of the present application. For example, the transmission method includes the following.

The frame structure of a bearer frame is determined. The bearer frame includes a plurality of types of code blocks. The bearer frame includes a plurality of slots. The slots support a plurality of slot sizes. A slot size is used in the determined frame structure.

The frame structure of a multiframe including the bearer frame is determined.

Target data is mapped to the multiframe for transmission.

For example, the transmission method includes the following.

Target data borne in slots of a bearer frame is acquired according to a first slot size. The bearer frame includes a plurality of types of code blocks. The bearer frame includes a plurality of slots. The slots support a plurality of slot sizes.

The target data in a multiframe is borne for transmission according to a second slot size, where the first slot size is not equal to the second slot size.

A computer storage medium of an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. More specific examples of the computer-readable storage medium include (non-exhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical storage element, a magnetic storage device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier, where the data signal carries computer-readable program codes. The data signal propagated in this manner may be in multiple forms, including, but not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included on the computer-readable medium may be transmitted by any suitable medium including, but not limited to, a wireless medium, a wire, an optical cable, a radio frequency (RF), or any suitable combination thereof.

Computer program codes for performing operations of the present application may be written in one or more programming languages or a combination thereof. The programming languages include object-oriented programming languages such as Java, Smalltalk, and C++ and may further include conventional procedural programming languages such as "C" or similar programming languages. The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer via any type of network including a local area network (LAN) or a wide area network (WAN) or may be connected to an external computer (for example, via the Internet provided by an Internet service provider).

The preceding are example embodiments of the present application and are not intended to limit the scope of the present application.

It is to be understood by those skilled in the art that the term "communication node" covers any suitable type of radio UE, for example, a mobile phone, a portable data processing device, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A transmission method, comprising:
determining a frame structure of a bearer frame, wherein the bearer frame comprises a plurality of types of code blocks, the bearer frame comprises a plurality of slots, the plurality of slots support a plurality of slot sizes, and a slot size among the plurality of slot sizes is used in the determined frame structure;
determining a frame structure of a multiframe comprising the bearer frame; and
mapping target data to the multiframe for transmission.

2. The transmission method according to claim 1, wherein a product of the slot size in the bearer frame and a number of the plurality of slots in the bearer frame is fixed, and a product of the number of the plurality of slots in the bearer frame and a number of bearer frames in the multiframe is fixed.

3. The transmission method according to claim 1, wherein the plurality of types of code blocks comprise a start code block, data code blocks, and an end code block; the bearer frame comprises an overhead field; the overhead field is borne in a data code block of the data code blocks, the start code block, or the end code block; and the overhead field indicates a number of bearer frames in the multiframe and positions of the bearer frames in the multiframe.

4. The transmission method according to claim 3, wherein the overhead field is located in a first data code block among the data code blocks; a bearer region of the bearer frame comprises data code blocks other than the first data code block and among the data code blocks, a region in the first data code block other than a region where the overhead field is mapped, and a region in the end code block other than a region where an end block is located; and the target data is borne in the bearer region.

5. The transmission method according to claim 3, wherein a bearer region of the bearer frame comprises the data code blocks, a region in the start code block other than a region where the overhead field is located, and a region in the end code block other than a region where an end block is located.

6. The transmission method according to claim 3, wherein the bearer frame meets one or more of the following conditions:
a number of code blocks, among the plurality of types of code blocks, comprised in a bearer region of the bearer frame is i times a first value, a number of code blocks in the target data is i times a second value, the first value is determined based on the code blocks in the target data, and the second value is determined based on the code blocks in the bearer region; or
a number of slots corresponding to the target data is a factor of a total number of slots in the multiframe.

7. The transmission method according to claim 6, wherein the first value is a length of a code block among the code blocks in the target data, and the second value is a length of a code block among the code blocks in the bearer region; or
the first value is a length of the target data divided by a common divisor, the second value is a length of a code block among the code blocks in the bearer region divided by the common divisor, and the common divisor is a common divisor of the length of the target data and the length of the code block in the bearer region.

8. The transmission method according to claim 6, wherein in a case where the start code block bears no overhead, the bearer frame comprises 1 start code block, 198 data code blocks, and 1 end code block, and a length of a code block among the code blocks in the target data is 66 bits; and in a case where the start code block bears overhead, the bearer frame comprises 1 start code block, 197 data code blocks, and 1 end code block, and the length of the code block in the target data is 66 bits.

9. The transmission method according to claim 6, wherein the slot size is x code blocks, a number of the plurality of slots in the bearer frame is y, a product of x and y is 192, and x and y are each a positive integer.

10. The transmission method according to claim 9, wherein the slot size is 2 code blocks, the number of the plurality of slots in the bearer frame is 96, and the multiframe consists of 5 bearer frames; or
the slot size is 4 code blocks, the number of the plurality of slots in the bearer frame is 48, and the multiframe consists of 10 bearer frames; or
the slot size is 8 code blocks, the number of the plurality of slots in the bearer frame is 24, and the multiframe consists of 20 bearer frames.

11. The transmission method according to claim 6, wherein in a case where the start code block bears no overhead, the bearer frame comprises 1 start code block, 330 data code blocks, and 1 end code block; and a length of a code block among the code blocks in the target data is 66 bits; and
in a case where the start code block bears overhead, the bearer frame comprises 1 start code block, 329 data code blocks, and 1 end code block; and the length of the code block in the target data is 66 bits.

12. The transmission method according to claim 11, wherein
the slot size is x code blocks, a number of the plurality of slots in the bearer frame is y, a product of x and y is 320, and x and y are each a positive integer.

13. The transmission method according to claim 11, wherein the slot size is 2 code blocks, a number of the plurality of slots in the bearer frame is 160, and the multiframe consists of 3 bearer frames; or
the slot size is 4 code blocks, a number of the plurality of slots in the bearer frame is 80, and the multiframe consists of 6 bearer frames; or
the slot size is 8 code blocks, a number of the plurality of slots in the bearer frame is 40, and the multiframe consists of 12 bearer frames.

14. The transmission method according to claim 6, wherein
in a case where the start code block bears no overhead, the bearer frame comprises 1 start code block, 495 data code blocks, and 1 end code block; and
in a case where the start code block bears overhead, the bearer frame comprises 1 start code block, 494 data code blocks, and 1 end code block.

15. The transmission method according to claim 14, wherein
the slot size is x code blocks, a number of the plurality of slots in the bearer frame is y, a product of x and y is 480, and x and y are each a positive integer.

16. The transmission method according to claim 15, wherein
the slot size is 2 code blocks, the number of the plurality of slots in the bearer frame is 240, and the multiframe consists of 2 bearer frames; or
the slot size is 4 code blocks, the number of the plurality of slots in the bearer frame is 120, and the multiframe consists of 4 bearer frames; or
the slot size is 8 code blocks, the number of the plurality of slots in the bearer frame is 60, and the multiframe consists of 8 bearer frames.

17. The transmission method according to claim 6, wherein in a case where the start code block bears no overhead, the bearer frame comprises 1 start code block, 990 data code blocks, and 1 end code block; and a length of a code block among the code blocks in the target data is 66 bits; and
in a case where the start code block bears overhead, the bearer frame comprises 1 start code block, 989 data code blocks, and 1 end code block; and the length of the code block in the target data is 66 bits.

18. The transmission method according to claim 17, wherein
the slot size is x code blocks, a number of the plurality of slots in the bearer frame is y, a product of x and y is 960, and x and y are each a positive integer.

19. The transmission method according to claim 18, wherein
the slot size is 2 code blocks, the number of the plurality of slots in the bearer frame is 480, and the multiframe consists of 1 bearer frame; or
the slot size is 4 code blocks, the number of the plurality of slots in the bearer frame is 240, and the multiframe consists of 2 bearer frames; or
the slot size is 8 code blocks, the number of the plurality of slots in the bearer frame is 120, and the multiframe consists of 4 frames.

20. The transmission method according to claim 6, wherein
in a case where the start code block bears no overhead, the bearer frame comprises 1 start code block, 65 data code blocks, and 1 end code block; and a length of a code block among the code blocks in the target data is 65; and
in a case where the start code block bears overhead, the bearer frame comprises 1 start code block, 64 data code blocks, and 1 end code block; and the length of the code block in the target data is 65.

21. The transmission method according to claim 20, wherein the slot size is x code blocks, a number of the plurality of slots in the bearer frame is y, a product of x and y is 64, and x and y are each a positive integer.

22. The transmission method according to claim 21, wherein
the slot size is 2 code blocks, the number of the plurality of slots in the bearer frame is 32, and the multiframe consists of 15 bearer frames; or
the slot size is 4 code blocks, the number of the plurality of slots in the bearer frame is 16, and the multiframe consists of 30 bearer frames; or
the slot size is 8 code blocks, the number of the plurality of slots in the bearer frame is 8, and the multiframe consists of 60 bearer frames.

23. The transmission method according to claim 6, wherein
in a case where the start code block bears no overhead, the bearer frame comprises 1 start code block, 195 data code blocks, and 1 end code block; and a length of a code block among the code blocks in the target data is 65; and
in a case where the start code block bears overhead, the bearer frame comprises 1 start code block, 194 data code blocks, and 1 end code block; and the length of the code block in the target data is 65.

24. The transmission method according to claim 23, wherein
the slot size is x code blocks, a number of the plurality of slots in the bearer frame is y, a product of x and y is 192, and x and y are each a positive integer.

25. The transmission method according to claim 24, wherein
the slot size is 2 code blocks, the number of the plurality of slots in the bearer frame is 96, and the multiframe consists of 5 bearer frames; or
the slot size is 4 code blocks, the number of the plurality of slots in the bearer frame is 48, and the multiframe consists of 10 bearer frames; or
the slot size is 8 code blocks, the number of the plurality of slots in the bearer frame is 24, and the multiframe consists of 20 bearer frames.

26. The transmission method according to claim 6, wherein
in a case where the start code block bears no overhead, the bearer frame comprises 1 start code block, 325 data code blocks, and 1 end code block; and a length of a code block among the code blocks in the target data is 65 code blocks; and
in a case where the start code block bears overhead, the bearer frame comprises 1 start code block, 324 data code blocks, and 1 end code block; and the length of the code block in the target data is 65 code blocks.

27. The transmission method according to claim 26, wherein
the slot size is x code blocks, a number of the plurality of slots in the bearer frame is y, a product of x and y is 320, and x and y are each a positive integer.

28. The transmission method according to claim 27, wherein
the slot size is 2 code blocks, the number of the plurality of slots in the bearer frame is 160, and the multiframe consists of 3 bearer frames; or
the slot size is 4 code blocks, the number of the plurality of slots in the bearer frame is 80, and the multiframe consists of 6 bearer frames; or
the slot size is 8 code blocks, the number of the plurality of slots in the bearer frame is 40, and the multiframe consists of 12 bearer frames.

29. The transmission method according to claim 1, wherein determining the frame structure of the bearer frame comprises:
determining the slot size used in the bearer frame; and
determining a number of the plurality of slots in the bearer frame.

30. The transmission method according to claim 1, wherein determining the frame structure of the multiframe comprising the bearer frame comprises:
determining a number of bearer frames comprised in the multiframe.

31. The transmission method according to claim 1, wherein mapping the target data to the multiframe for the transmission comprises:
mapping the target data to the bearer frame;
inserting an idle code block between bearer frames according to a set rule; and
transmitting the bearer frame.

32. The transmission method according to claim 31, wherein the set rule comprises one of:
inserting a first fixed number of idle code blocks between adjacent bearer frames;
inserting a second fixed number of idle code blocks periodically after every fixed number of bearer frames; and
inserting a third fixed number of idle code blocks in one multiframe period.

33. The transmission method according to claim 1, further comprising:
receiving the bearer frame bearing the target data;
restoring an idle code block between bearer frames to an original idle distribution status according to a set rule;
extracting the target data from the bearer frame; and
restoring clock information of the target data based on the idle code block and a local clock.

34. A transmission method, comprising:
acquiring, according to a first slot size, target data borne in slots of a bearer frame, wherein the bearer frame comprises a plurality of types of code blocks, the bearer frame comprises a plurality of slots, and the plurality of slots support a plurality of slot sizes; and
bearing the target data in a multiframe for transmission according to a second slot size,
wherein the first slot size is not equal to the second slot size.

35. The transmission method according to claim 34, wherein the first slot size is smaller than the second slot size, and bearing the target data in the multiframe for the transmission according to the second slot size comprises:
splicing the target data acquired from j slots and bearing the spliced target data in the multiframe for the transmission, wherein a slot size of the spliced target data is the second slot size, and j is a ratio of the second slot size to the first slot size.

36. The transmission method according to claim 35, wherein the first slot size comprises 2 or 4, and the second slot size comprises 4 or 8.

37. The transmission method according to claim 34, wherein the first slot size is greater than the second slot size, and bearing the target data in the multiframe for the transmission according to the second slot size comprises:
splitting the target data in one slot into k pieces of target data in the second slot size, wherein k is a ratio of the first slot size to the second slot size; and
bearing the split target data in the multiframe for the transmission.

38. The transmission method according to claim 37, wherein the first slot size comprises 4 or 8, and the second slot size comprises 2 or 4.

39. A communication node, comprising:
at least one processor; and
a storage apparatus configured to store at least one program;
wherein the at least one program, when executed by the at least one processor, causes the at least one processor to perform the transmission method according to any one of claims 1 to 38.

40. A storage medium for storing a computer program, wherein the computer program, when executed by a processor, causes the processor to perform the transmission method according to any one of claims 1 to 38.
